(19) **Europäisches Patentamt / European Patent Office / Office européen des brevets**

(11) **EP 2 146 357 B1**

(12) **EUROPEAN PATENT SPECIFICATION**

(45) Date of publication and mention of the grant of the patent:
**08.08.2018 Bulletin 2018/32**

(21) Application number: **08752109.2**

(22) Date of filing: **25.04.2008**

(51) Int Cl.:
*H01F 1/26* (2006.01)          *C01G 49/00* (2006.01)
*C04B 35/58* (2006.01)          *C22C 38/00* (2006.01)
*H01F 1/00* (2006.01)          *H01F 1/14* (2006.01)
*H01F 1/33* (2006.01)

(86) International application number:
**PCT/JP2008/058035**

(87) International publication number:
**WO 2008/136391 (13.11.2008 Gazette 2008/46)**

(54) **MAGNETIC MATERIAL FOR HIGH FREQUENCY WAVE, AND METHOD FOR PRODUCTION THEREOF**

MAGNETMATERIAL FÜR HOCHFREQUENZWELLE UND HERSTELLUNGSVERFAHREN DAFÜR

MATÉRIAU MAGNÉTIQUE POUR ONDE À HAUTE FRÉQUENCE, ET PROCÉDÉ DE PRODUCTION ASSOCIÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.04.2007  JP 2007119124**
**02.11.2007  JP 2007285816**

(43) Date of publication of application:
**20.01.2010  Bulletin 2010/03**

(73) Proprietors:
• **Asahi Kasei Kabushiki Kaisha**
**Osaka-shi**
**Osaka 530-8205 (JP)**
• **Tokyo Institute of Technology**
**Tokyo 152-8552 (JP)**

(72) Inventors:
• **IMAOKA, Nobuyoshi**
**Tokyo 100-8440 (JP)**
• **ABE, Masanori**
**Tokyo 152-8552 (JP)**
• **NAKAGAWA, Takashi**
**Tokyo 152-8552 (JP)**
• **TADA, Masaru**
**Tokyo 152-8552 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**JP-A- 8 055 712          JP-A- 8 144 024**
**JP-A- 03 153 851          JP-A- 06 112 019**
**JP-A- 10 284 314          JP-A- 2002 093 607**
**JP-A- 2002 329 603**

**Description**

TECHNICAL FIELD

The present invention relates to a magnetic material for a high frequency wave, particularly a composite magnetic material for a high frequency wave and a magnetic material-resin composite material for a high frequency wave, including magnetic materials used in transformers, heads, inductors, reactors, magnetic cores, yokes, antennas, microwave devices, magnetostriction devices, magnetoacoustic devices and magnetic recording devices which are used mainly in power equipment and information-communications related devices and which are used in high or ultrahigh frequency fields, and sensors through magnetic fields such as Hall elements, magnetic sensors, electric current sensors, rotation sensors and electronic compasses; further magnetic materials to suppress interruptions by unnecessary electromagnetic interference, such as electromagnetic noise absorbing materials, electromagnetic wave absorbing materials and materials for magnetic shield; and magnetic materials to remove noises from signals in high frequency or ultrahigh frequency fields, such as materials for inductor elements such as inductors for noise removal, materials for radio frequency identification (RFID) tags and materials for noise filters.

"A composite magnetic material for a high frequency wave" mentioned here refers to a magnetic material for a high frequency wave which is obtained by compositing two different kinds of magnetic materials and works. Simply "a composite magnetic material" refers to a magnetic material which is obtained by compositing two different kinds of magnetic materials and works, and is not limited to a magnetic material for a high frequency wave. Further, "a magnetic material for a high frequency wave" refers to a magnetic material which acts on an electric field, a magnetic field or an electromagnetic field in the frequency range of 30 kHz to 3,000 GHz to perform "target functions", and includes "a composite magnetic material for a high frequency wave". Further, "target functions" refer to magnetic functions such as electromagnetic induction, self-induction, high magnetic permeability, high frequency loss, magnetostriction, magnetic domain formation and semihard magnetism of magnetic materials; and the magnetic material for a high frequency wave of the present invention is used in elements, parts and devices utilizing these functions. Within the scope of the present invention, an electromagnetic wave of a frequency at 30 kHz or higher and 3,000 GHz or lower is referred to as "a high frequency wave"; and in that "an ultrahigh frequency wave" refers to a high frequency wave of 1 GHz or higher. As long as not otherwise specified, "an ultrahigh frequency wave" is a concept contained in "a high frequency wave". In the present invention, as long as not otherwise specified, "a low frequency wave" refers to an electromagnetic wave having a frequency lower than the high frequency wave. "A magnetic material-resin composite material for a high frequency wave" is a composite material of a magnetic material for a high frequency wave and a resin; and simply "a magnetic material-resin composite material" refers to a composite material of a magnetic material and a resin, and is not limited to a magnetic material-resin composite material for a high frequency wave.

The present invention discloses electromagnetic characteristics in the range of 0.005 to 33 GHz in detail by way of Examples, and verifies that the magnetic material of the present invention has excellent "target functions", but the material of the present invention is not used being limited to this range.

BACKGROUND ART

Recently, along with the down-sizing and multi-functionalization and the speeding-up of arithmetic processing of various types of information and communication devices such as personal computers, mobile phones and digital cameras, which are mobile information and communication devices, making driving frequencies higher is much progressing, and propagation of devices utilizing high frequency waves, particularly ultrahigh frequency waves, keeps on enlarging. Demand for devices for satellite communication, mobile communication, car navigation and the like, which utilize electromagnetic waves of a microwave band has remarkably expanded in recent years, and the electronic vehicle toll collection system (ETC), short range wireless communication such as wireless LAN, vehicular millimeter wave radars such as anticollision radars and the like have began to propagate. In the current tendency that utilizations of high frequency waves and ultrahigh frequency waves are progressing, a magnetic material which losslessly follows electromagnetic field variations of high frequencies is strongly demanded.

On the other hand, the electromagnetic environmental deterioration caused by electromagnetic waves released outwardly from high-frequency devices is seen as a problem, and the movement of law regulations by public institutions and international institutions, and self-imposed regulations is currently being activated. However, since there is a contradictory causal relation in which signals useful in individual devices give trouble to other devices and living bodies, the problem is very difficult to cope with. In order to solve the problem, the establishment of not releasing unnecessary electromagnetic waves and having a strong tolerance against external noises, that is, the establishment of the electromagnetic compatibility (EMC) taking both aspects of generation of electromagnetic waves (EMI) and damage thereby (EMS) into an outlook, is important.

As examples of countermeasures for EMC described above, electromagnetic noise absorbing materials recently frequently used in electronic devices will be described hereinafter.

The electromagnetic noise absorbing materials are a material having a function of suppressing the release of electromagnetic waves to the outside in the vicinity of electromagnetic noise generating sources. In the high-frequency field of several hundreds of MHz or higher, sheet-shaped electromagnetic noise absorbing materials are often used which utilize the natural resonance of Ni-Zn ferrite or the like to absorb electromagnetic noises of high frequencies such as higher harmonics transmitted on lines and convert the absorbed energy to a heat energy to suppress the noises. Required magnetic characteristics are two points of a high relative magnetic permeability and a high natural resonance frequency of magnetic materials. Since ferrite has a high electric resistivity, it exhibits little performance deterioration due to eddy-current loss, and has been said to be a favorable material in the high-frequency field.

Now, the relative magnetic permeability of a material in an alternating magnetic field where an electromagnetic wave acts or otherwise is expressed in a complex number representation as follows:

[Expression 1]

$$\mu_r = \mu' - i\mu'' \qquad (1)$$

; $\mu_r$ is designated as a complex relative magnetic permeability; and the imaginary term $\mu''$ in this expression has a relation with the absorbed energy P of the electromagnetic wave as follows:

[Expression 2].

$$P = \frac{1}{4\pi} f\mu'' \mu_0 |H|^2 \qquad (2)$$

That is, a higher value of $\mu''$ at a frequency f means a higher absorbing power of an electromagnetic wave at a frequency f. Here, $\mu_0$ is a magnetic permeability of vacuum; and $|H|$ is a magnitude of a magnetic field of the electromagnetic wave.

The frequencies of electromagnetic noises have recently reached the ultrahigh frequency field of GHz, and utilization of ferrites conventionally used has become difficult. This results from the following situation.

The product of the real term $\mu'$ of the complex relative magnetic permeability and the natural resonance frequency $f_r$ is proportional to the saturation magnetization $I_s$, and the relationships between them are as follows:

[Expression 3]

$$f_r \cdot \mu' = \frac{\nu I_s}{3\pi\mu_0} = 5.6 \text{ [GHz]} \qquad (3)$$

wherein ν is a gyromagnetic constant. That is, if the value of saturation magnetization is nearly the same, a high relative magnetic permeability causes a resonance at a low frequency; and a material causing no resonance up to a high frequency has a low relative magnetic permeability. This trade-off relation is the so-called Snoek limit, and the relational expression (3) directly indicates that utilization of ferrites at a high frequency field has an upper limit.

It is now brought into a subject, for example, that ferrites are intended to be utilized for absorption of electromagnetic noises in the frequency range of 2 to 10 GHz used in next-generation PCs, mobile phones, wireless LANs and the like. When the natural resonance frequency is 2 to 10 GHz, the real term of the complex relative magnetic permeability of ferrites derives only a small value of 2.8 to 0.56 from the relational expression (3). The imaginary term is also regarded to be no more than this value, and actually is a very small value. So, the ferrite has not yet been applied to electromagnetic wave noise absorbing materials in the GHz band. Because of this problem, metal-based magnetic materials which have larger saturation magnetization values than ferrites have been recently utilized actively, such as Fe, Fe-Ni-based alloys, Fe-Ni-Si-based alloys, sendust, Fe-Cu-Nb-Si-based alloys and amorphous alloys, and magnetic material-resin composite materials in which magnetic metal micrograins are dispersed in an insulating resin or the like have been developed.

The electric resistivities of metal materials are 10 to 140 $\mu\Omega$cm, considerably low as compared with 4, 000 to $10^{18}$ $\mu\Omega$cm of the electric resistivity of ferrites. Hence, in the case of using metal materials in a high frequency field, a high magnetic permeability cannot be achieved up to a high frequency. This is because insulating layers are indispensably needed in order to prevent the magnetic permeability from starting decreasing from a low frequency field due to eddy-current loss, and the non-magnetic portions finally reduce the intrinsic complex relative magnetic permeability in a high frequency field of magnetic material-resin composite materials. Further, in an ultrahigh frequency field exceeding 1 GHz, even in such composite materials, the magnetic permeability unavoidably decreases by the influence of eddy-current loss.

The description of electromagnetic noise absorption will be made hereinafter taking sendust as an example, which is one of the most effective materials as conventional electromagnetic noise absorbing materials. First, in the case where an electromagnetic wave at a frequency f penetrates into a material, the skin depth s at which the intensity of the electromagnetic field decreases to 1/e has a relational expression (4) as follows:

[Expression 4].

$$s = \left(\frac{\rho}{\pi\mu\mu_0 f}\right)^{1/2} \qquad (4)$$

In the case of sendust, the ratio $\rho/\mu\mu_0$ of the electric resistivity $\rho$ and the magnetic permeability $\mu\mu_0$ is $80\times10^{-8}$ [$\Omega$m] / ($30000\times4\pi\times10^{-7}$) [$N/A^2$] = $2\times10^{-5}$ [$m^2$] ; substitution of this value in the relational expression (4) gives a skin depth by an electromagnetic wave at 1 GHz of approximately 0.08 $\mu$m.

The condition of not decreasing the real term of the complex relative magnetic permeability of a material due to the eddy-current loss is that the grain diameter of the material is made twice or less the skin depth. Therefore, in the case of using sendust at 1 GHz or higher, the grain diameter must be made approximately less than 2 $\mu$m, but pulverization by an industrially available mechanical method can almost hardly achieve such a diameter.

Although metal-based magnetic bodies imparted form-anisotropy are also used, the thickness of the metal-based magnetic fillers must be made also less than 0.2 $\mu$m according to the same reasons as the powder described above, the metal-based magnetic bodies have a limit to applications to ultrahigh frequency usage even if the magnetic permeability is made large by increasing the filling factor to some extent. For developing the metal-based magnetic bodies as electromagnetic noise absorbing materials, measures to achieve the purpose not by the absorption by natural resonance but by the absorption by eddy-current loss are naturally conceivable. However, even in that case, the electromagnetic absorption in high frequency and ultrahigh frequency fields cannot be developed without designing materials such that the eddy-current loss fails to become remarkable in a low frequency field. Generally, the maximum value of the imaginary term of a complex relative magnetic permeability obtained by the eddy-current loss is considerably smaller than the case of the natural resonance.

The developments are further attempted on high-magnetic permeability materials such as metal multilayer films and nanogranular films, which necessitate thin-film fabricating technologies including sputtering and vacuum deposition. Although the magnetic permeability is high, films of only several micrometers as a whole can be fabricated; a sufficient noise absorption power cannot be achieved; and the cost is high. As a result, the above developments have not yet been put to practical use.

An example in which a high magnetic permeability is achieved as a magnetic material for a high frequency wave by a ferrite thin film of approximately 3 $\mu$m has been recently proposed in NON-PATENT DOCUMENT 1. A principle is used in which the confinement of magnetization in the film plane by a demagnetizing field raises the resonant frequency. However, the ferrite thin film does not have a magnetic permeability sufficient for ultrahigh frequency applications, and the film forming rate cannot be said to be satisfactory for mass production of smooth thin film materials in $\mu$m units.

Hence, there have been strongly desired developments of magnetic materials for electromagnetic noise absorbing materials having a higher magnetic permeability in a high frequency field and more excellent performance of suppressing electromagnetic noises; and developments of electromagnetic noise absorbing materials, such as sheets dispersing these magnetic materials in a resin, which can easily be produced in mass production and have broad application fields including usage requiring flexibility.

Other than the above metal materials and the above thin film materials, soft magnetic hexagonal magnetoplumbite ferrites are proposed as soft magnetic materials superior in frequency characteristics of the complex relative magnetic permeability in a high frequency band to spinel soft magnetic ferrites. That is, they are a Z-type hexagonal ferrite whose composition formula is $Ba_3Co_2Fe_{24}O_{41}$ and the like.

Since these materials have the in-plane magnetic anisotropy in which the easy magnetization direction is in the c-plane, the product of the resonance frequency and the complex relative magnetic permeability real term is expressed by the relational expression (5) shown below, wherein $H_{a1}$ represents an anisotropy magnetic field off the easy direction in the c-plane and $H_{a2}$ represents an anisotropy magnetic field deflecting to the c-axis direction.

[Expression 5]

$$f_r \cdot \mu' = \frac{\nu I_s}{3\pi\mu_0} \sqrt{H_{a2}/H_{a1}} \qquad (5)$$

Since an in-plane magnetic anisotropic material is $H_{a2}>H_{a1}$, the material is larger by a coefficient $((H_{a2}/H_{a1})^{1/2}>1)$ than the relational expression (3) described above; therefore, in consideration of the frequency variation of the complex relative magnetic permeability real term, the natural resonance frequency shifts to a higher one and the material results in exceeding the Snoek limit. A magnetic material of such type can be said to have a possibility of being an ideal material as a magnetic material for high frequency applications.

However, the soft magnetic hexagonal magnetoplumbite ferrite material also has an electric resistivity which cannot be made sufficiently high for the required performance, and has an obstacle of a large eddy-current loss. As a result, this ferrite material has not yet been put to practical use.

As described above, in order to make an excellent magnetic material for a high frequency wave, in absorption-type magnetic materials to suppress/absorb spuriouses and electromagnetic noises, for example, like electromagnetic noise absorbing materials, and also in magnetic permeation-type magnetic materials to follow a magnetic field or an electromagnetic field of using frequency and generate an amplified magnetic field or electromagnetic field like magnetic cores for high frequency waves and materials for RFID tags, it is important that the real term of the complex relative magnetic permeability does not decrease up to a high frequency band, up to an ultrahigh frequency band according to need, and the imaginary term thereof does not increase similarly in both types.

Additionally, in the case of the absorption-type magnetic material, it is important that the imaginary term of the complex relative magnetic permeability increases with the increasing frequency in a high frequency wave band or ultrahigh frequency wave band even if the imaginary term is near 0 in a low frequency field, and is sufficiently high at a desired frequency where unnecessary radiation and harmonics and the like are present.

Further, in order to amplify the intensity of signals in RFID tags for high frequency signals and the like, it is important that a high real term of the magnetic permeability in a frequency field where the signals are present is materialized, but depending on applications, it is simultaneously necessary that signals of lower frequency side than a certain frequency are not absorbed and noises such as higher harmonics in a high frequency to ultrahigh frequency field are absorbed and removed; and materials are sometimes demanded of which the imaginary term $\mu''$ of the complex relative magnetic permeability is near 0 at a frequency field lower than, particularly, 1 GHz as a boundary frequency and of which the $\mu''$ is large in a higher frequency field, that is, ultrahigh frequency field (a material having a higher "selective absorption ratio of 1 GHz or higher" later defined is a material more adapted for the purpose described above).

Only oxide magnetic materials and metal-based magnetic materials are conventionally used as magnetic materials for high frequency applications. And ferrite-based oxide magnetic materials having a high electric resistivity have a small problem with eddy-current loss, but have an important problem of not providing a sufficient magnetic permeability; by contrast, the metal-based magnetic materials have a high magnetic permeability, but a low electric resistivity, so they have a problem of causing the eddy-current loss at a low frequency band; thus, both have problematical points of not being suitable as magnetic materials for high frequency applications.

NON-PATENT DOCUMENT 1: M. Abe and M. Tada, "Phenomenological Theory of Permeability in Spin-Sprayed NiZn Ferrite Films Usable for GHz Conducted Noise Suppressors", The Institute of Electrical Engineers of Japan, The Papers of Technical Meeting, MAG-05-135 (Dec. 5 to 6, 2005, Technical Meeting on Magnetics).

JP 2002-329603, JP 8-055712, JP 8-144024 and JP 03-153851 disclose a magnetic material comprising a rare-earth-iron-nitrogen based material.

JP 2002-329603 discloses a magnetic material represented by the general formula $R_xFe_{100-x-y}N_yH_z$, wherein R is a rare earth element (including Y), $3 \leq x \leq 20$, $5 \leq y \leq 30$ and $0.01 \leq z \leq 10$. The crystal structure is rhombohedral or hexagonal. Iron can be partly replaced by Ni, Ti, V, Cr, Mn, Zn, Cu, Zr, Nb, Mo, Ta, W; Ru, Rh, Pd, Hf, Re, Os or Ir and nitrogen can be partly replaced by C, P, Si, S or Al. The mean particle diameter is 0.1-100 $\mu$m. JP 8-055712 discloses the same material and further describes its preparation process by subjecting and alloy composed of rare earth and iron to a heat treatment in the range of 200-650 °C in an atmosphere containing ammonia.

JP2002-093607 discloses a process of including a magnetic material having ferrite coating in a resin for preparing a radio wave absorber.


DISCLOSURE OF THE INVENTION


PROBLEMS TO BE SOLVED BY THE INVENTION


It is an object of the present invention to provide a magnetic material for a high frequency wave using a nitride-based magnetic material, the magnetic material allowing for materializing a high magnetic permeability because of having a higher magnetization than the oxide magnetic materials and for solving problems such as the eddy-current loss described above because of having a higher electric resistivity than the metal materials by using a rare earth-iron-nitrogen based magnetic material as a magnetic material for high frequency applications.

It is further an object of the present invention to provide, by using a rare earth-iron-nitrogen based magnetic material on the powder surface of which a ferrite-based magnetic material is coated, a novel nitride-based high-performance (that is, having a high magnetic permeability) magnetic material allowing for the electric resistivity of the rare earth-iron-nitrogen based magnetic material to be further raised and allowing for more effectively solving the problems such as the eddy-current loss described above.

MEANS FOR SOLVING THE PROBLEMS

As a result of exhaustive studies on a magnetic material for a high frequency wave excellent in electric characteristics, having a high magnetic permeability and a high electric resistivity capable of solving the problems of the eddy-current loss described above, which are characteristics contrary to the characteristics of conventional magnetic materials, and simultaneously having both advantages of metal-based magnetic materials and oxide magnetic materials, the present inventors have found that the use of a rare earth-iron-nitrogen based magnetic material of a nitride type, different from any of the oxide magnetic materials and the metal-based magnetic materials conventionally used, exhibits excellent functions as a magnetic material for a high frequency wave, and the controls of the composition, the crystal structure, the direction of magnetic anisotropy and the grain diameter, and further the establishment of its production method have led to the accomplishment of the present invention.

Further, the present inventors have found that the use of a magnetic powder in which a ferrite-based magnetic material is coated on the surface of the rare earth-iron-nitrogen based magnetic material as a composite magnetic material for a high frequency wave achieves especially the electric insulation·magnetic coupling (described later in detail); and that molding the magnetic powder into a magnetic material-resin composite material for a high frequency wave and the like can provide a magnetic material for a high frequency wave exhibiting functions serving the purpose such as the improvement in magnetic permeability. And, the controls of the composition, the microstructure and the crystal structure, the direction of magnetic anisotropy and the grain diameter, and further the establishment of its production method have led to the accomplishment of the present invention.

Specifically, the present invention is as follows :

(1) A magnetic material for a high frequency wave of from 0.005 to 100 GHz comprising a rare earth-iron-nitrogen based magnetic material, the crystal structure of the main phase of which is selected from any one of hexagonal crystal, rhombohedral crystal and tetragonal crystal,
wherein the rare earth-iron-nitrogen based magnetic material has an in-plane magnetic anisotropy as a crystal magnetic anisotropy, and
wherein the magnetic material has an average grain diameter of 0.2 to 200 $\mu$m, and
wherein the rare earth-iron-nitrogen based magnetic material is represented by the following general formula:

$$R_xFe_{(100-x-y)}N_y \qquad (I)$$

wherein R is at least one kind selected from Y, Ce, Pr, Nd, Gd, Tb, Dy, Ho, Er, Tm, Lu and Sm; and when R contains Sm, the whole R component contains less than 50% by atom of Sm; and x and y are numbers that satisfy $3 \le x \le 30$ and $1 \le y \le 30$ % by atom, respectively.

(2) The magnetic material for a high frequency wave according to (1), wherein the proportion of nitrogen in the rare earth-iron-nitrogen based magnetic material represented by the general formula (I) is $12 \le y \le 25$.

(3) The magnetic material for a high frequency wave according to any one of (1) or (2), wherein a surface of the rare earth-iron-nitrogen based magnetic material is coated with a ferrite-based magnetic material.

(4) The magnetic material for a high frequence wave according to (3), wherein the ferrite-based magnetic material is a ferrite having a spinel structure.

(5) The magnetic material for a high frequency wave according to (3) or (4), wherein the ferrite-based magnetic material has a thickness of 0.8 to 10,000 nm.

(6) A magnetic material-resin composite material for a high frequency wave, comprising 5 to 99.9 % by mass of the magnetic material for a high frequency wave according to any one of (1) to (5) and 0.1 to 95 % by mass of a resin.

(7) The magnetic material for a high frequency wave according to any one of (1) to (5), wherein the magnetic material is magnetically oriented.

(8) Use of the magnetic material for a high frequency wave as defined in any one of (1) to (5), in a method for producing an electromagnetic wave absorbing material.

(9) Use of the magnetic material for a high frequency wave as defined in any one of (1) to (5), in a method for producing an electromagnetic noise absorbing material.

(10) Use of the magnetic material for a high frequency wave as defined in any one of (1) to (5), in a method for producing a material for a Radio Frequency Identification (RFID) tag.

(11) A method for producing the magnetic material for a high frequency wave according to (1), comprising subjecting an alloy composed substantially of an R component and an Fe component to a heat treatment in an atmosphere containing ammonia gas or nitrogen gas in the range of 200 to 650 °C.

(12) A method for producing the rare earth-iron-nitrogen based magnetic material for use in the magnetic material for a high frequency wave according to (3), comprising subjecting a rare earth-iron-nitrogen based magnetic material to a ferrite plating treatment, wherein the rare earth-iron-nitrogen based magnetic material is produced by the method according to (11); or subjecting a rare earth-iron-nitrogen based magnetic material to a ferrite plating treatment, wherein the rare earth-iron-nitrogen based magnetic material is produced using the further process of a fine pulverization in addition to the method according to (11).

ADVANTAGES OF THE INVENTION

The present invention can provide a magnetic material for a high frequency wave having a high magnetic permeability and a small eddy-current loss, particularly a magnetic material for a high frequency wave suitably utilized also for information devices and the like functioning in an ultrahigh frequency field of 1 GHz or higher.

BEST MODE FOR CARRYING OUT THE INVENTION

Hereinafter, the present invention will be described in detail.

The present invention relates to a rare earth-iron-nitrogen based magnetic material, or a magnetic material for a high frequency wave obtained by coating the surface of a rare earth-iron-nitrogen based magnetic material with a ferrite-based magnetic material; the major form thereof is a rare earth-iron-nitrogen based magnetic material "powder", or a composite magnetic material "powder" for a high frequency wave in which the surface of a rare earth-iron-nitrogen based magnetic material powder is coated with a ferrite-based magnetic material. These magnetic material powders for a high frequency wave are solidified and molded as they are, or components such as resins and molded are added thereto. And then, they are used as magnetic materials for a high frequency wave according to various applications. In composite magnetic materials for a high frequency wave, a rare earth-iron-nitrogen based magnetic material component is mainly responsible for ferromagnetism, and the rare earth-iron-nitrogen based magnetic material can be used as it is. But, if a ferrite-based magnetic material coated on its surface coexists, the electric resistivity is greatly improved. And moreover, since the coated component is magnetized, the magnetic coupling of the whole composite magnetic material for a high frequency wave is allowed, a decrease in magnetic permeability is made not to be particularly large, and thus the decrease in magnetic permeability can be detained at a relatively small value. Or, the magnetic permeability can reversely be improved due to an influence of the magnetic coupling in an ultrahigh frequency field. These effects are unlike the case where a coated component being non-magnetic such as silica or magnesia is incorporated.

Hereinafter, there will be described the composition and the crystal structure/morphology/magnetic anisotropy of a rare earth-iron-nitrogen based magnetic material, the kind/crystal structure/morphology of a ferrite-based magnetic material, and resin components of a magnetic material-resin composite material for a high frequency wave, and their production methods, particularly a method for nitriding a rare earth-iron based raw material alloy to provide a rare earth-iron-nitrogen based magnetic material, and a method for coating a ferrite-based magnetic material and a method for magnetically orienting it.

A rare earth element (R) in the general formula (I) described in the above aspect (2) of the present invention suffices if it contains at least one of Y, Ce, Pr, Nd, Sm, Gd, Tb, Dy, Ho, Er, Tm and Lu, and therefore a mixed raw material of two or more rare earth elements such as misch metals and didymium may be used, but preferable rare earth elements are Y, Ce, Pr, Nd, Gd, Dy and Er. More preferable are Y, Ce, Pr, Nd, Gd and Dy.

Particularly, if the whole R component contains 50% by atom or more of Nd or Pr, a material having the outstandingly high magnetic permeability and the maximum absorbed energy coefficient defined later can be provided. And further, 70% by atom of Nd or Pr is preferably contained in view of a balance of the antioxidative performance and costs.

In a rare earth-iron-nitrogen based magnetic material (hereinafter, also referred to as "R-Fe-N based magnetic material") having a rhombohedral or hexagonal crystal structure, if the rare earth component contains 50% by atom or more of Sm, the relative magnetic permeability (the imaginary term and real term of the complex relative magnetic permeability) in a high frequency field is as remarkably low as 1 or less in some cases. Thus, if the absorption using the natural resonance of a nitride is intended to be utilized, for the reason that the usage of the nitride is limited in applications of an ultrahigh frequency exceeding 33 GHz, especially exceeding 100 GHz, the magnetic material is sometimes not preferable for the object of the present invention positively utilizing the in-plane magnetic anisotropy.

This is because, in a rare earth-iron-nitrogen based magnetic material having a rhombohedral or hexagonal crystal structure, with Sm as a rare earth component, the uniaxial anisotropy constant $K_u$ is positive at room temperature or higher and thus the magnetic material is a material uniaxial in the crystal magnetic anisotropy; and with other rare earth elements such as Y, Ce, Pr, Nd, Gd, Tb, Dy, Ho, Er, Tm and Lu, the uniaxial anisotropy constant $K_u$ is negative at room temperature or higher and thus the crystal magnetic anisotropy has a tendency of being in-plane. However, since a rare earth-iron-nitrogen based magnetic material having a tetragonal crystal structure is not applied to the case, the content of Sm exceeding 50% by atom as a rare earth component is effective.

The are earth element used here may have a industrially available purity, and may include impurities which are inevitably contained in manufacturing, such as O, H, C, Al, Si, F, Na, Mg, Ca and Li.

The magnetic powder of the present invention contains 3 to 30% by atom of an R component. In the case where the R component is 3% by atom or less, a soft magnetic metal phase containing much of an iron component is separated beyond the acceptable amount even after the base metal casting/annealing, and such a type of a soft magnetic metal phase has a maximum absorbing frequency (which is defined later) in a low frequency field, decreases the magnetic permeability, and inhibits function as a magnetic material for a high frequency wave in a high frequency field or an ultrahigh frequency field, which is one of the objects of the present invention. Thus, the case where R component is 3% by atom or less is not preferable.

In the case where the R component exceeds 30% by atom, the magnetic permeability and the magnetization decrease, and thus the case where the R component exceeds 30% by atom is not preferable. A more preferable composition range of R is 5 to 20% by atom.

Iron (Fe) is a basic composition of the rare earth-iron-nitrogen based magnetic material responsible for ferromagnetism, and is contained in 40% by atom or more. With Fe less than 40% by atom, the magnetic permeability and the magnetization become small, which is not preferable. With Fe exceeding 96% by atom, a soft magnetic metal phase containing much of Fe is separated, which is not preferable for the same reason as the case of the insufficient R component described above. With the composition range of an iron component of 50 to 85% by atom, the material is made a well balanced material having a high magnetic permeability and a natural resonance frequency and maximum absorbing frequency in preferable ranges, which is especially preferable.

The feature of the present invention is the application itself of a "rare earth-iron-nitrogen based magnetic material" as a magnetic material for a high frequency wave, and is to allow for the usage thereof in a high frequency field, which is difficult in the case of utilizing oxide magnetic materials and metal-based magnetic materials. However, in order to develop especially excellent target functions, the nitrogen (N) amount incorporated in the composition described above is in the range of 1 to 30% by atom. The amount exceeding 30% by atom generally decreases the magnetic permeability; and the amount of less than 1% by atom does not so much improve the magnetic permeability in a high frequency field or in an ultrahigh frequency field, which is not preferable.

Nitrogen being contained in a magnetic material is the greatest feature on the composition of the present invention, but one of its major effects is an increase in electric resistivity. A remarkably large eddy-current loss decreases the real term of the complex relative magnetic permeability to inhibit a large electromagnetic absorption due to the natural resonance in a high frequency field or in an ultrahigh frequency field. The magnitude of the frequency at which the eddy-current loss becomes remarkably large for a magnetic material having a certain grain diameter is determined by the magnitude of the electric resistivity/the magnetic permeability as shown by the relational expression (4).

In materials having the nearly same magnetic permeability, those having a higher electric resistivity exhibit a higher critical frequency at which the eddy current is generated. Therefore, since nitrogen being contained in the magnetic material of the present invention increases the electric resistivity and makes the eddy current not remarkably large until the frequency reaches a high frequency field corresponding to a high natural resonance frequency an R-Fe-N based magnetic material intrinsically has, a high real term of the complex relative magnetic permeability can be kept up to a high frequency field or an ultrahigh frequency field. And further, since the effect of the natural resonance can fully be exhibited in a high frequency field, a high imaginary term of the complex relative magnetic permeability is materialized in a high frequency field or an ultrahigh frequency field.

In order to further improve the electric resistivity of a rare earth-iron-nitrogen based magnetic material to make the magnetic material to be a magnetic material for a high frequency wave suitably usable in an ultrahigh frequency field or in a frequency field of 10 GHz or higher, the incorporated nitrogen (N) amount is more desirably controlled in a "high nitriding" range of 12 to 25% by atom. From the view point of the simplification of processes, the range of 16 to 25% by atom in which an annealing treatment after the nitriding process is not needed is more preferable, and a rare earth-iron-nitrogen based magnetic material of which nitrogen amount is controlled in this range has an especially high natural resonance frequency and electric resistivity.

The phenomena that the high nitriding makes the microstructure of a rare earth-iron-nitrogen based magnetic material fine, and thus the increase of the electric resistivity occurs are utilized in this application. The mechanism thereof will be described later.

Further, in the present invention, depending on target frequency fields, a ferrite-based magnetic material (this layer is referred to as "ferrite coating layer") coating a rare earth-iron-nitrogen based magnetic material is responsible for the improvement of the electric resistivity contributing to the eddy-current reduction. In the case where the ferrite coating layer is intended to be made thin and grain systems of ferromagnetism portions of the main phase are intended to be made large in order to acquire a magnetic permeability, if the rare earth-iron-nitrogen based magnetic material is contained, the main phase responsible for high magnetic characteristics has a high electric resistivity. Thus, the material design can be provided with a large versatility to exhibit target functions.

With respect to a preferable range of the nitrogen amount, an optimum nitrogen amount differs depending on target applications, and an R-Fe compositional ratio, a ratio of the subphase amount, further a crystal structure and the like of an R-Fe-N based magnetic material, but if, for example, $Nd_{10.5}Fe_{76.1}Ni_{12.4}$ having a rhombohedral structure is selected as a raw material alloy, the optimum nitrogen amount is nearly 10 to 22% by atom. The optimum nitrogen amount at this time refers to a nitrogen amount, differing depending on targets, which is optimum for the antioxidative performance and at least one characteristic of magnetic characteristics and electric characteristics of a material.

The magnetic characteristics used here refer to at least one of a magnetic permeability ($\mu\mu_0$), a relative magnetic permeability ($\mu$), a complex magnetic permeability ($\mu_r\mu_0$), a complex relative magnetic permeability ($\mu_r$), its real term ($\mu'$), its imaginary term ($\mu''$) and its absolute value ($|\mu_r|$), a maximum value ($\mu''_{max}$) of $\mu''$ in an arbitrary frequency field in the frequency dependency of the complex relative magnetic permeability imaginary term and a frequency at this time ($f_a$: this frequency is referred to as a maximum absorbing frequency), a maximum value ($\mu'_{max}$) of $\mu'$ in an arbitrary frequency field in the frequency dependency of the complex relative magnetic permeability real term and a frequency at this time ($f_t$), a maximum absorbing energy coefficient ($f\mu''_{max}$) being the maximum value of an absorbing energy coefficient which a product $f\mu''$ of a value of a complex relative magnetic permeability imaginary term $\mu''$ at a frequency f and a value of the frequency f is referred to as a ratio ($\mu_f$: referred to as a selective absorbing ratio at a frequency f or higher) of $\mu''_{max}$ at a frequency f or higher and $\mu''_{max}$ at a frequency lower than f, a magnetization ($I_s$), an uniaxial magnetic anisotropy magnetic field or an in-plane magnetic anisotropy magnetic field ($H_a$, $H_{a1}$, $H_{a2}$), an absolute value of a magnetic anisotropy energy ($E_a$), a magnetic anisotropy ratio (p/q: where q represents a magnetization of a magnetic material at an external magnetic field of 1.0 MA/m in the applied orienting magnetic field direction when the magnetic material is uniaxially magnetically oriented at an orienting magnetic field of 1.2 MA/m, and p represents a magnetization thereof at an external magnetic field of 1.0 MA/m in the perpendicular direction thereto), and a natural resonance frequency ($f_r$) with an external alternating magnetic field caused by a variation rate of magnetic permeability with temperature, electromagnetic waves and the like, of a material.

The electric characteristics refer to an electric resistivity (= volume resistivity p), an electric conductivity ($\sigma$), an impedance (Z), an inductance (L), a capacitance (C), a reactance (R), a permittivity ($\varepsilon\varepsilon_0$), a relative permittivity ($\varepsilon$), a complex permittivity ($\varepsilon_r\varepsilon_0$), a complex relative permittivity ($\varepsilon_r$), its real term ($\varepsilon'$), its imaginary term ($\varepsilon''$) and its absolute value ($|\varepsilon_r|$), and a loss term ($\varepsilon_t=\varepsilon''+\sigma/\omega$, the $\varepsilon_t$ is referred to as an electric loss term, the $\omega$ is an angular frequency), of a material. The magnetic characteristics described above and the electric characteristics are collectively referred to as electromagnetic characteristics. The marking method is sometimes employed in which a horizontal line (-) is added above the symbols of "$\mu$" and "$\varepsilon$" representing a relative magnetic permeability and a relative permittivity, but in the description of the present invention, the relative magnetic permeability and the relative permittivity are simply represented by "$\mu$" and "$\varepsilon$", respectively. The magnetic permeability described above can be regarded as a complex relative magnetic permeability absolute value at f→0; and the permittivity, as a complex permittivity absolute value at f→0.

The magnetic permeability and the permittivity are a relative magnetic permeability and a relative permittivity multiplied by the vacuum magnetic permeability and the vacuum permittivity, respectively.

In the description of the present invention, for example, when expressed as that "the magnetic permeability is high" or "the relative magnetic permeability is high", the expression means that the magnetic permeability or the relative magnetic permeability of a material in a static magnetic field is high; that in an alternating magnetic field such as in the action of an electromagnetic wave, the absolute value of the complex magnetic permeability or complex relative magnetic permeability is high; that if the complex relative magnetic permeability imaginary term is near 0, the complex relative magnetic permeability real term is high; and that if the complex relative magnetic permeability real term is near 0, the complex relative magnetic permeability imaginary term is high. The above relation is similarly applicable to the permittivity or the relative permittivity as well, and if "the magnetic permeability" in the above description is reread as "the permittivity", the relation can be readily understood.

Among the electromagnetic characteristics described above, the maximum absorbing energy coefficient "$f\mu''_{max}$" will be described in detail. When an electromagnetic energy penetrating into an electromagnetic noise absorbing material from the outside is converted to a thermal energy to exhibit a target function, the electromagnetic wave absorption energy amount P due to the conversion to the thermal energy is given by the relational expression (2). It is understood according to the relational expression (2) that $f\mu''$ is proportional to P. The electromagnetic wave of a frequency f when the $f\mu''$ is a maximum absorption energy coefficient $f\mu''_{max}$ being the maximum of the $f\mu''$ is most efficiently absorbed in a material, and the absorbed energy amount is proportional to the $f\mu''_{max}$. Therefore, $f\mu''_{max}$ is one of indices indicating the energy absorption power of a magnetic material for a high frequency wave. A higher value thereof can be said to provide a more excellent electromagnetic noise absorbing material.

For a ferrite-based magnetic material, assuming the probability of $\mu' \geqq \mu''_{max}$ in the Snoek limit and the relational expression (3), the maximum absorption energy coefficient is approximately 5.6 GHz or lower. Therefore, in the present invention, the facts that the maximum absorption energy coefficient of a magnetic material for a high frequency wave is a value exceeding approximately 6 GHz and up to 4,000 GHz is taken into account.

The significance of the selective absorption ratio $\mu_f$ will be described hereinafter.

Among the magnetic materials for high frequency waves of the present invention, since a material having a high $\mu_f$, which is a ratio of $\mu''_{max}$ at a frequency of f or higher and $\mu''_{max}$ at a frequency less than f, does not much absorb signals in a field less than a frequency of f and can absorb relatively largely harmonics and the like in a field of f or higher. Thus, among applications to materials for RFID tags and the like, applications requiring not suppressing signals but suppressing only spuriouses are very advantageously developed.

Since the high-speed and high-functionalization of electronic devices has progressed in recent years, a high $\mu_f$ at a high or higher frequency is required. $\mu_f$ is required to be 1 or higher at a frequency of 0.5 GHz or higher. In mobile devices which are driven at a higher frequency, $\mu_f$ is required to be 1 or higher at 1 GHz or higher, and in consideration of the progress of the high frequency wave technology of recent years, $\mu_f$ is more preferably desired to be 1 or higher at 2 GHz or higher. The magnitude of $\mu_f$ of preferably 10 or higher at a desired or higher frequency makes it possible to develop the magnetic material to highly excellent electromagnetic noise absorbing materials to mainly suppress supriouses only.

Next, the optimum state of the magnetic characteristics and the electric characteristics will be described.

The optimum state of the magnetic characteristics or the electric characteristics means that the magnetic permeability, the real term or imaginary term in a high frequency field of the complex relative magnetic permeability, the magnetization, the Curie point, the electric resistivity, the permittivity, the real term, imaginary term or loss term of the complex relative permittivity, or the like exhibits a maximum value, and the absolute value of a variation rate with temperature of the magnetic permeability or magnetization, the electric conductivity or the like exhibits a minimum value. With respect to the magnetic anisotropy ratio, the magnetic anisotropy magnetic field, the magnetic anisotropy energy and the like, which have close relations with a natural resonance frequency, a state set at a value at which the natural resonance is generated at a desired frequency, or the absorption of the electromagnetic wave becomes maximum is said to be optimum.

Each composition of the R-Fe-N based magnetic materials of the present invention is in the range of 3 to 30% by atom for a rare earth component, 40 to 96% by atom for an iron component and 1 to 30% by atom for N, and these compositions need to be simultaneously satisfied.

The rare earth-iron-nitrogen based magnetic material of the present invention contains phases selected from rhombohedral, hexagonal and tetragonal crystal structures. In the present invention, a phase having these crystal structures fabricated and containing at least R, Fe and N is referred to as a main phase; and a phase having a composition having no these crystal structures fabricated or having other crystal structures fabricated is referred to as a sub-phase. The sub-phase is a phase not being a main phase which is produced intentionally or uselessly in the course producing a rare earth-iron-nitrogen (-hydrogen-oxygen) based magnetic material from a rare earth-iron raw material.

The crystal structure of a main phase include, for example, the rhombohedral crystal having the same crystal structure as $Th_2Zn_{17}$ and the like, the hexagonal crystal having the same crystal structure as $Th_2Ni_{17}$, $TbCu_7$, $CaZn_5$ and the like, and the tetragonal crystal nitride phase having a high magnetism like an $RFe_{12-x}M_xN_y$ phase, and at least one of these must be included.

Above these all, the rhombohedral crystal phase having the same crystal structure as $Th_2Zn_{17}$ and the like, and the hexagonal crystal phase having the same crystal structure as $Th_2Ni_{17}$ and the like are most preferably included in order to get good electromagnetic characteristics and their stabilities.

As a sub-phase in an R-Fe-N based magnetic material, an R-Fe alloy raw material phase, a hydride phase, a decomposed phase containing an Fe nanocrystal, an oxidized amorphous phase and the like may be contained, but in order to fully exhibit the advantage of the present invention, the volume fraction must be suppressed to a lower content than that of a main phase, and the content of the main phase exceeding 75% by volume with respect to the total of the R-Fe-N based magnetic material is very preferable from a practical standpoint. The main phase of an R-Fe-N based magnetic material is produced in such a way that nitrogen is intruded in between lattices of an R-Fe alloy of a main raw material phase, and crystal lattices expand in many cases, but the crystal structure has the nearly same symmetry as the main raw material phase.

The volume fraction used here refers to a proportion of a volume which a certain component occupies with respect to the total volume including voids of a magnetic material.

The main raw material phase used here refers to a phase containing at least R and Fe and not containing N, and having the rhombohedral, hexagonal or tetragonal crystal structure (here, a phase having a composition other than the above composition or another crystal structure and not containing N is referred to as a sub-raw material phase.).

Along with the expansion of crystal lattices due to intrusion of nitrogen, the antioxidative performance, or one or more of magnetic characteristics and electric characteristics are improved to make an R-Fe-N based magnetic material which is preferable from a practical standpoint. For the first time after this nitrogen incorporation process, a preferable magnetic material for a high frequency wave is made, and develops electromagnetic characteristics entirely different from conventional R-Fe alloys and Fe, which contain no nitrogen.

For example, in the case of selecting $Pr_{10.5}Fe_{89.5}$ having the rhombohedral structure as a main raw material phase of an R-Fe component base alloy, the incorporation of nitrogen increases the electric resistivity and improves magnetic characteristics including the Curie point, the magnetic permeability and the absolute value of the magnetic anisotropy energy, and the antioxidative performance.

The rare earth-iron-nitrogen based magnetic material of the present invention is preferably a material utilizing the in-plane magnetic anisotropy of the magnetic material. The in-plane magnetic anisotropic material is a material which is energetically more stable with the magnetic moment present on the c plane than with the magnetic moment present on the c axis. Therefore, $H_{a2}>H_{a1}$ is required. As indicated in the relational expression (5), when $H_{a2}/H_{a1}$ becomes larger, a high magnetic permeability at the higher frequency can be achieved. That is, the material of the present invention is desirably a material having $H_{a1}$ of 0.01 to $10^6$ A/m, $H_{a2}$ of 10 to $10^{10}$ A/m and $H_{a2}>H_{a1}$. However, the natural resonance frequency of a material is represented by the relational expression (6), and when the absorbed electromagnetic wave reaches a high frequency, a product of $H_{a2}H_{a1}$ becomes important, and it is important that this magnitude is between 0.7 to $7\times10^{13}$ [$A^2/m^2$].

[Expression 6]

$$f_r = 4\pi\nu \sqrt{H_{a2}\,H_{a1}} \qquad (6)$$

With this magnitude of less than 0.7, the frequency of an absorbed electromagnetic wave is too low to be applied to high frequency applications, and with that of $7\times10^{13}$ or higher, the absorption of the electromagnetic wave is not enough to fully provide the magnetic characteristics of the material of the present invention.

An Sm-Fe-N based magnetic material having the rhombohedral or hexagonal crystal structure is not an in-plane magnetic anisotropic material but a uniaxial magnetic anisotropic material, and there are well-known magnet materials, for example, materials described in Japanese Patent No. 2703281 (hereinafter, referred to as "PATENT DOCUMENT 1") and T. Iriyama, K. Kobayashi, N. Imaoka, T. Fukuda, H. Kato and Y. Nakagawa, "Effect of Nitrogen Content on Magnetic Properties of Sm2Fe17Nx (0<x<6)", IEEE Trans Magn, vol.2, No.5-2, 2326-2331 (1992) (hereinafter, referred to as "NON-PATENT DOCUMENT 2"). However, in the case where such a magnet material of not an in-plane magnetic anisotropic material but a uniaxial magnetic anisotropic material is intended to be applied as a magnetic material of high frequency applications, the magnetic material often functions only in an ultrahigh frequency field exceeding 100 GHz as described before, and additionally, the magnetic permeability in an ultrahigh frequency field is small (the imaginary term and the real term of the complex relative magnetic permeability are less than 1). Thus, the above Sm-Fe-N based magnetic material having the rhombohedral or hexagonal crystal structure is not preferably used for a major component accounting for 50% by volume or more of the whole magnetic material.

Thus, the rare earth-iron-nitrogen based magnetic material of the present invention is composed of, as a main constituent, a ternary or more intermetallic compound or solid solution having an in-plane magnetic anisotropy and containing a rare earth component, an iron component and a nitrogen component, and has a feature of a magnetic material for a high frequency wave utilizing the in-plane magnetic anisotropy of a magnetic material composed of these ternary or more components.

Therefore, magnetic materials for high frequency waves in which a rare earth-iron based alloy or a rare earth-iron-hydrogen based material is thermally decomposed based on the disproportionation reaction, and a nano-scale $\alpha$-Fe or $\varepsilon$-Fe$_3$N is dispersed in a rare earth oxide, described in, for example, JP-A-2005-5286 (hereinafter, referred to as "PATENT DOCUMENT 2"), T. Maeda, S. Sugimoto, T. Kagotani, D. Book, M. Homma, H, Ota and Y. Honjou, "Electromagnetic Microwave Absorption of a-Fe Microstructure Produced by Disproportionation Reaction Of Sm2Fe17 Compound", Materials Trans, JIM, vol.41, No.9, 1172-1175(2000) (hereinafter, referred to as "NON-PATENT DOCUMENT 3"), and S. Sugimoto, T. Maeda, D. Book, T.Kagotani, K. Inomata, M. Homma, H. Ota, Y. Honjou and R. Sato, "GHz microwave absorption of a fine a-Fe structure produced by disproportionation of Sm2Fe17 in hydrogen", J.of Alloys and Compounds, vol.330-332, 301-306(2002) (hereinafter, referred to as "NON-PATENT DOCUMENT 4"), are definitely different from the magnetic material for a high frequency wave of the present invention in the point that the present invention utilizes the property of the in-plane magnetic anisotropy of the rare earth-iron-nitrogen based magnetic material, and therefore, they are magnetic materials for high frequency waves entirely different from the magnetic material for a high frequency wave of the present invention even if a raw material alloy and a thermal treatment gas similar to the present invention are used.

Also, similarly to the Sm-Fe-N based magnetic material, the well-known rare earth based magnet materials such as Nd-Fe-B based ones and Sm-Co based ones of not the in-plane magnetic anisotropy but the uniaxial magnetic anisotropy cannot be said to be suitable as a magnetic material for a high frequency wave. The reason is not only that the magnetic materials for Nd-Fe-B based and Sm-Co based magnet materials have a uniaxial anisotropy of the crystal magnetic anisotropy, but also that the magnet materials, even if they are metal-based magnetic materials, exhibit a low electric resistivity and a decrease in the magnetic permeability in a high frequency field due to eddy-current loss.

Taking as an example a material obtained by nitriding an $Nd_2Fe_{17}$ base alloy having the rhombohedral crystal among the rare earth-iron-nitrogen based magnetic materials of the present invention, the relations between the nitrogen compositional amount and the natural resonance frequency or the microstructure will be described in detail hereinafter.

In the case of incorporating nitrogen to $Nd_2Fe_{17}$, $Nd_2Fe_{17}N_3$ having three nitrogen atoms per $Nd_2Fe_{17}$ optimizes many magnetic characteristics including the magnetic anisotropy energy, the magnetic permeability and the Curie temperature. This is a similar situation to an $Sm_2Fe_{17}N_3$ material which has been already put in practical use as a magnet material (for example, see NON-PATENT DOCUMENT 2).

The anisotropy magnetic fields $H_{a1}$ and $H_{a2}$ of the $Nd_2Fe_{17}N_3$ material having almost no grain boundaries and a pulverized grain diameter of 25 $\mu$m are estimated to be 30 kA/m and 3 MA/m, respectively, based on the magnetic curves; and based on these values and the relational expression (5), the calculated value of the natural resonance frequency $f_r$ is approximately 10 GHz. Therefore, the $Nd_2Fe_{17}N_3$ has the $f_r$ at approximately 10 GHz; and deviation of the number of N from 3 per $Nd_2Fe_{17}$, substitution of Nd with a light rare earth such as Ce or La, and substitution of Fe with an M component exhibit a tendency of lessening the $f_r$ generally in many cases. Of course, if the conditions such as grain diameters and the coating state of a ferrite-based magnetic material are changed, the $f_a$ is sometimes observed to be seemingly reversely high. Further, using a heavy rare earth such as Dy and making the nitrogen amount much often give a high $f_r$ or $f_a$.

Thus, many of the composite magnetic materials of the present invention have $f_r$ in the range of 0.1 to 30 GHz (there are of course cases where $f_r$ exists beyond this range, and for example, a magnetic material of Example 20 of the present invention has $f_r$ exceeding 30 GHz). Also, in order to regulate $f_a$ and make a material for a high frequency wave having a high $\mu_{max}$ and a high selective absorption ratio at 1 GHz or higher, devising alloy compositions of various rare earth-iron-nitrogen based magnetic materials, controlling the microstructures and grain diameters, controlling compositions, microstructures and coating treatments of ferrite-based magnetic materials coated on the rare earth-iron-nitrogen based magnetic materials, and studying kinds of resins and compositions of magnetic material-resin composite materials are carried out. In order that the composite magnetic material of the present invention has $f_r$ at 0.1 to 30 GHz, although depending on the magnitude of $H_{a1}$, it is important that the magnetic anisotropy ratio is approximately in the range of 0.4 to 0.95.

Then, if the nitrogen amount incorporated exceeds 3 per $Nd_2Fe_{17}$ and is increased to approximately 5 to 5.5, a magnetic material having a very fine microstructure is obtained and the electric resistivity in the coarse powder state exhibits a maximum.

This microstructure is formed by the facts that if N exceeds 3 per $Nd_2Fe_{17}$ and increases, the crystal lattice expands because N interstitially intrudes, undergoes an unstable state, and finally, an uneven concentration distribution of N is caused, and portions where the crystal lattice has collapsed or is about to collapse are generated.

Further, depending on the alloy composition, nitrogen amount, nitriding condition, and annealing condition after nitriding, a cell-like structure (this structure which is hereinafter referred to as a cell structure) may occur in which a portion where the crystal lattice has collapsed or a portion where the crystal lattice is about to collapse surrounds a ferromagnetic phase having the rhombohedral or hexagonal crystal structure. As examples in which a cell structure occurs, results of observations of the microstructure of Sm-Fe-Mn-N based magnetic materials by TEM (transmission electron microscope) are disclosed, for example, in Japanese Patent No. 3560387 (hereinafter, referred to as "PATENT DOCUMENT 3") and in N. Imaoka, A. Okamoto, H. Kato, T. Ohsuna, K. Hiraga, and M. Motokawa, "Magnetic Properties and Microstructure of Mn-added Sm2Fe17Nx based Material", Journal of the Magnetics Society of Japan, vol.22, No.4-2, 353-356 (1998) (hereinafter, referred to as "NON-PATENT DOCUMENT 5"). From these documents, it is clear that if the nitrogen amount incorporated exceeds 3 per $Sm_2Fe_{17}$, a cell structure having a crystal grain diameter of 10 to 200 nm occurs. The occurrence of such a cell structure is observed to have an effect of inhibiting the eddy-current generation, but the magnetization slightly decreases. However, even with the magnetization decreased, the real term and the imaginary term of the complex relative magnetic permeability are observed to be reversely improved in some cases, and further, $f_a$ can be shifted to a higher frequency side; so the incorporation amount of N is desired to be determined by the maximum absorption frequency and the complex relative magnetic permeability in target applications.

A method of forming a cell structure in a rare earth-iron-nitrogen based magnetic material as disclosed in PATENT DOCUMENT 3 and NON-PATENT DOCUMENT 5, or a method of forming a phase containing an inclusion phase micro-dispersed, and then annealing it in an atmosphere containing hydrogen to reduce the nitrogen amount and to improve the magnetization as disclosed in Japanese Patent No. 3784085 (hereinafter, referred to as "PATENT DOCUMENT 4") can be applied, as they are, to a rare earth-iron-nitrogen based magnetic material of the present invention. Therefore, it is clear that the nitrogen amount of a rare earth-iron-nitrogen based magnetic material having a fine microstructure as described above is suitably in the range indicated in PATENT DOCUMENT 3 and PATENT DOCUMENT 4, the range being 12 to 25% by atom.

Further, for the improvement of the electric resistivity, and $f_r$ and $f_a$, the range of the nitrogen amount where a cell structure acts most effectively is 16 to 25% by atom. A rare earth-iron-nitrogen based magnetic material in this composition range has a high $f_a$. Additionally, the relative magnetic permeability (the imaginary term and/or the real term of the complex relative magnetic permeability) of such a rare earth-iron-nitrogen based magnetic material exceeds 1 even in a frequency field of 33 GHz or higher.

The magnetic material of the present invention is a powder of 0.2 to 200 $\mu$m in average grain diameter. Here, the average grain diameter refers to a median diameter determined based on a volume-corresponding diameter distribution curve obtained by a grain size distribution analyzer commonly used.

In the region of an average grain diameter of less than 0.2 $\mu$m, the decrease in the magnetic permeability and the aggregation of the magnetic powder become remarkable, and the magnetic characteristics which the material intrinsically has cannot be fully exhibited. Additionally, this region is a region not applicable to common industrial production, so the region cannot be said to be a very suitable grain diameter range. However, even if the diameter is less than 0.2 $\mu$m, since the magnetic material is overwhelmingly superior in the antioxidative performance to a nitrogen-not containing metal-based magnetic material for a high frequency wave, the magnetic material is suitable for a magnetic material for a high frequency wave for thin-walled or ultrasmall-sized special applications.

The average grain diameter of less than 0.1 $\mu$m causes ignitability and necessitates a complicated production process such as handling the powder in a low oxygen atmosphere. Also, when exceeding 200 $\mu$m the magnetic permeability in a high frequency field decreases; and when exceeding 2,000 $\mu$m, a difficulty in producing a homogeneous nitride occurs, and additionally a material is inferior in the absorption of electromagnetic waves of 30 kHz or higher.

Further, the average grain diameter of 0.5 to 10 $\mu$m provides a material having $f_a$ in a high frequency field and a high magnetic permeability, and the material has the high selective absorption ratio at 0.1 GHz or higher, which is preferable.

The average grain diameter of 0.5 to 3 $\mu$m provides a material having a high selective absorption ratio at 1 GHz or higher and especially excellent in the antioxidative performance. For example, in the case of using the magnetic material of the present invention at 1 GHz or higher, the selective absorption ratio at 1 GHz or higher is preferably 1 or more, but control of the grain diameter to 0.5 to 3 $\mu$m turns the value to 1.1 to infinity. In an Nd-Fe-N based material, calculation of the range of an ideal grain diameter having little influence on the eddy-current loss in a field of 1 to 10 GHz by using the $\rho/\mu\mu_0$ value experimentally determined from the relational expression (4) and data of a coarse powder gives 1 to 3 $\mu$m (if the magnitude, $4\times10^{-6}$ $\Omega$m, of a typical electric resistivity of the Nd-Fe-N based material is applied to this result, the magnetic permeability of the single crystal is found to be approximately 400.).

In a composite magnetic material micropowder surface-coated with a ferrite-based magnetic material of the present invention described in detail later, particularly the average grain diameter of 0.2 to 10 $\mu$m is suitable for a magnetic material for a high frequency wave, which is improved in the selective absorption ratio at 1 GHz or higher.

The average grain diameter of the composite magnetic material for a high frequency wave of the present invention can be calculated by adding a thickness of the ferrite coating layer multiplied by 2 to the average grain diameter of the rare earth-iron-nitrogen based magnetic material. By this method, the average grain diameter of the rare earth-iron-nitrogen based magnetic material can be calculated from an observed value of the average grain diameter of the composite magnetic material for a high frequency wave.

The shape of the magnetic powder is desirably a shape exhibiting a low demagnetizing field so as to be able to assume a high magnetic permeability. That is, the shape preferably assumes a flat or slender form such as a scaly, ribbon-shaped, needle-like, circular or ellipsoidal form. The preferable flat powder will be described hereinafter.

Flat powders contained in magnetic material-resin composite materials for high frequency waves fabricated by a method such as extrusion molding, injection molding, rolling molding or press molding, and moldings of a high frequency magnetic material fabricated through various types of compression molding can be regarded as flat rectangular parallelepipeds or ellipsoids of revolution on a reference plane cut along the extrusion or rolling direction, flow direction or the direction perpendicular to the press direction.

Even for magnetic material-resin composite materials for high frequency waves or high frequency magnetic material moldings fabricated by a method such as casting, calender molding or others, taking as a reference plane a cross-sectional plane cut along a plane containing their longitudinal direction and thinnest direction, the flat powders can be regarded as flat rectangular parallelepipeds or ellipsoids of revolution on the plane as in the above.

In the case where this flat powder can be regarded as a flat rectangular parallelepiped, the short side of a cross-sectional plane (rectangle) cut along the reference plane of the flat powder is defined as the thickness of the flat powder. In the case where the flat powder can be regarded as a flat ellipsoid of revolution, a length two times the minor axis of a cross-sectional plane (ellipse) which is cut along the reference plane of the flat powder is defined as the thickness of the flat powder. In the case where the flat powder can be regarded as a flat rectangular parallelepiped, the flatness ratio of the flat powder is a ratio $(d/\sqrt{A})$ of a height (d) of a rectangular parallelepiped to a square root of a bottom area (A) thereof. In the present invention, when the observation is satisfactory enough to handle the flatness ratio of a flat powder defined by "a method intuitively acceptable" described above, the value is preferably 0.5 to $10^{-6}$. The flatness ratio $\phi$ of a flat powder can be also known from the cross-sectional plane of a magnetic material-resin composite material for a high frequency wave. With respect to the flatness ratio $\phi$ of a flat powder, in the case where the flat powder is regarded as a rectangular parallelepiped, a ratio (d/l) of the short side (d) of a rectangle corresponding to the cross-sectional plane to the long side (1) thereof is defined as a flatness ratio $\phi$ of the flat powder. In the case where a flat powder is regarded as an ellipsoid of revolution, a ratio (b/a) of the minor axis (b) of an ellipse corresponding to the cross-sectional plane to the major axis (a) thereof is defined as a flatness ratio $\phi$ of the flat powder. In the present invention, a powder having this flatness ratio $\phi$ of 0.5 to $10^{-6}$ is defined as "a flat powder". Even a powder having a needle-like appearance is included in the category of flat powder if the flatness ratio is in the above definition. Further, a flat powder is part of "powder" used in the present invention.

Hereinafter, "the cross-sectional plane of a magnetic material-resin composite material for a high frequency wave or a magnetic material molding for a high frequency wave" refers to a cross-sectional plane which is cut along a reference plane from a part near the center of the magnetic material-resin composite material for a high frequency wave or the magnetic material molding for a high frequency wave. Generally, in the cross-sectional plane of a magnetic material-resin composite material for a high frequency wave or a magnetic material molding for a high frequency wave, the directions of the long sides (1) of rectangles or the major axes (a) of ellipses are uniformly aligned to the direction of extrusion or rolling or the direction perpendicular to the pressing direction. If the flatness ratio $\phi$ is near 1, the flat powder cross-sectional plane can be approximated to a square or a circle; and if the flatness ratio $\phi$ is as near 0 as possible, when the cross-sectional plane is observed by SEM or TEM, a possibility that both ends of the flat powder are in the finite observation area is reduced and a structure in which flat powders are seemingly parallelly aligned is observed. The flat powder of the present invention has an average flatness ratio $\psi$ of $0.5 \geqq \psi \geqq 10^{-6}$ in the cross-sectional plane of a magnetic material-resin composite material for a high frequency wave or a magnetic material molding for a high frequency wave.

The average flatness ratio $\psi$ is preferably $0.2 \geqq \psi \geqq 10^{-6}$ from the view point of reducing the demagnetization constant to improve the magnetic permeability, and preferably $0.5 \geqq \psi \geqq 10^{-4}$ and more preferably $0.2 \geqq \psi \geqq 10^{-4}$ from the view point of the productivity.

When the average flatness ratio $\psi$ is determined, although it is ideal that the number of grains statistically sufficiently representing the whole magnetic material constituting a magnetic material-resin composite material for a high frequency wave or a magnetic material molding for a high frequency wave, for example, if the flatness ratio of a grain having the smallest flatness ratio and a grain having the largest flatness ratio is two digits, is 500 or more as the population to make the error less than 10% (a significant figure is one digit), examination of $\phi$ of approximately 20 grains in a material when the flatness ratio of the grains is sufficiently uniform can generally judge weather the average flatness ratio $\psi$ is in the range described above in many cases.

When an average flatness ratio of a magnetic material for a high frequency wave which is not yet molded and in a powdery state is determined, as exemplified by "a method intuitively acceptable" described above, a method is desirable in which average values of the thickness and the bottom area are measured by some method to calculate $d/\sqrt{A}$. For the d, there is a method of measuring an average thickness of a raw material before pulverization by a microgauge or the like; For the A, an average bottom area is estimated by SEM observation or the like. In the case where these methods is difficult, the measurement of the cross-sectional plane of a magnetic material-resin composite material for a high frequency wave or a magnetic material molding for a high frequency wave after once subjected to some molding is conducted to determine the average flatness ratio.

As described above, the shape of a magnetic material powder may be spherical, bulky, scaly, ribbon-like, needle-like, disk-like, ellipsoidal, amorphous powder or mixed powder thereof, but in the case of coating a ferrite-based magnetic material, the shape of a magnetic material powder must be a form on which the coating is effectively carried out.

To the magnetic material for a high frequency wave of the present invention, metal-based magnetic materials such as Fe, Ni, Co, Fe-Ni based alloys, Fe-Ni-Si based alloys, sendusts, Fe-Si-Al based alloys, Fe-Cu-Nb-Si based alloys and amorphous alloys, and oxide-based magnetic materials including garnet type ferrites such as magnetite, Ni-ferrites, Zn-ferrites, Mn-Zn ferrites and Ni-Zn ferrites, and soft magnetic hexagonal magnetoplumbite type ferrites, can be mixed.

Application of this mixed material to electromagnetic wave absorbing materials broadens the frequency band in which electromagnetic waves are absorbed from a high frequency field to a low frequency field, and noises in a broad band can be absorbed even in a high frequency field by imparting a broad absorbing property. However, the amount must be 0.001 to 99% by mass based on the total of the magnetic materials including the magnetic material of the present invention. If the amount is less than 0.001% by mass, there is no effect of adding a metal-base magnetic material or an oxide-based magnetic material; and if that exceeds 99% by mass, the effects the rare earth-iron-nitrogen based magnetic material of the present invention imparts to various electromagnetic characteristics are almost lost.

In order to make fully the best use of features such as the absorption in an ultrahigh frequency field of a rare earth-iron-nitrogen based magnetic material, it is important that the amount of a metal-based magnetic material or an oxide-based magnetic material other than the rare earth-iron-nitrogen based magnetic material preferably accounts for 0.05 to 75% by mass in mass fraction with respect to the total of the magnetic materials. And, in order to make the best use of features of electric characteristics of the rare earth-iron-nitrogen based magnetic material, it is important that the amount more preferably accounts for 0.01 to 50% by mass.

Now, the absorbed energy amount of electromagnetic waves is expressed using an electric loss term as follows:
[Expression 7]

$$P = \frac{1}{4\pi} \, f\varepsilon_t\varepsilon_0|E|^2 \qquad (7)$$

wherein $\varepsilon_0$ is the permittivity of vacuum; and $|E|$ is a magnitude of an electric field of an electromagnetic wave.

Among the rare earth-iron-nitrogen based magnetic materials or magnetic material-resin composite materials of the present invention, there are materials having an imaginary term of the complex relative magnetic permeability at 1 GHz or higher, that is, an electric loss term exceeding 10, and materials having an electric loss term of higher values exceeding 50. And, in that case, the typical value of the electric resistivity of the rare earth-iron-nitrogen based magnetic material itself exhibits a suitable magnitude, 200 to 8,000 $\mu\Omega$cm, which lies midway between nitrogen-not containing metal-based magnetic materials and oxide-based magnetic materials. If an electromagnetic wave generation source is an electronic circuit, since an electromagnetic wave at a far-field (This refers to a zone at a distance exceeding $1/2\pi$ of a wavelength. A zone being not far-field is called a near-field.) is an electromagnetic wave having also a sufficiently high electric field E similarly to a magnetic field H, the absorption according not only to the relational expression (2) but to the relational expression (7) can be very usefully obtained in some cases in applications in an ultrahigh frequency field such as absorption of noises exceeding 10 GHz and applications such as far-field radio wave absorbers used for anechoic chamber.

In such a way, the rare earth-iron-nitrogen based magnetic material is a magnetic material having also a high permittivity, and particularly has a unique feature as a suitable material for electromagnetic wave absorbing materials. Also in the case of blending a metal-based magnetic material or an oxide-based magnetic material, this feature should be preferably kept.

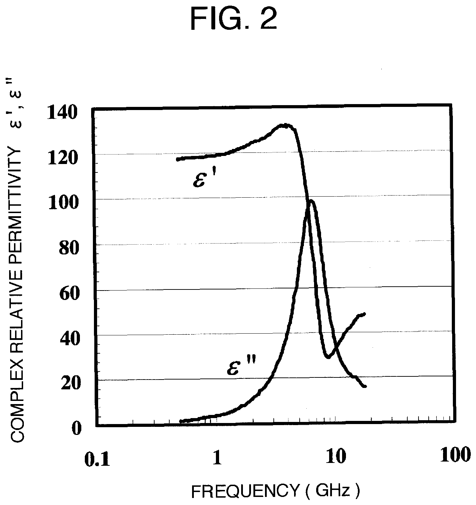

Here will be described the case where the rare earth-iron-nitrogen based magnetic material of the present invention and/or the rare earth-iron-nitrogen based magnetic material coated with a ferrite-based magnetic material described later is applied to materials for RFID tags. In this application, it is important that the magnetic material of the present invention is located on portions effective for improving the signal intensity transceived by RFID tags and antennas on readers, for example, the whole back surface of an antenna. With respect to magnetic characteristics, for improvement of the signal sensitivity, it is required that the magnetic permeability is higher than 1, and further higher than 2 in a frequency field where signals are present, for example, at around 13.56 MHz and at 0.85 to 1 GHz. Simultaneously for not absorbing signals, it is also important that the imaginary term of the complex relative magnetic permeability and the imaginary term of the complex relative permittivity are both approximately 0. With respect to the complex relative magnetic permeability for materials for RFID tags used in a 0.85 to 1 GHz field, a material having a very high selective absorption ratio at 1 GHz or higher (that is, almost no electromagnetic waves at 1 GHz or lower are absorbed. For example, see Example 3) is disclosed in Examples of the present invention, and such a material is a material preferable for this application. Further as shown in Fig. 2, the imaginary term of the complex relative magnetic permeability can be made approximately 0 in a 0.85 to 1 GHz field. Therefore, the magnetic material of the present invention can be said to be very suitable as a material for RFID tags.

The magnetic material for a high frequency wave of the present invention acts on magnetic fields, electric fields and electromagnetic fields and achieves target functions in a high frequency field; if the magnetic material of the present invention, which is easily produced and has an average grain diameter of 0.2 to 200 $\mu$m, is applied to high frequency applications, it makes a magnetic material for a high frequency wave exhibiting high electromagnetic characteristics especially in a frequency field of 0.005 to 33 GHz. If the magnetic material having an in-plane magnetic anisotropy of the present invention is applied to high frequency applications, it makes a magnetic material for a high frequency wave exhibiting high electromagnetic characteristics especially in a frequency field of 0.1 to 100 GHz. Therefore, the frequency range in which the magnetic material of the present invention, which has an average grain diameter of 0.2 to 200 $\mu$m and has an in-plane magnetic anisotropy, is applied as a magnetic material for a high frequency wave of from 0.005 to 100 GHz. The most preferable frequency field in which the average grain diameter and the magnetic anisotropy exhibit a synergistic effect is 0.1 to 33 GHz.

Then, a ferrite-based magnetic material coating the rare earth-iron-nitrogen based magnetic material of the present invention will be described in detail. The introduction of the coating layer can make the properties of the above-mentioned rare earth-iron-nitrogen based magnetic material further remarkable mainly in improvement of the electric resistivity and improvement of the magnetic permeability. In the present invention, a rare earth-iron-nitrogen based magnetic material expressed as "a rare earth-iron-nitrogen based magnetic material coated with a ferrite-based magnetic material" has the same meaning as a composite magnetic material in which the surface of a rare earth-iron-nitrogen based magnetic material is coated with a ferrite-based magnetic material. Therefore, when a certain composite magnetic material is specified by the expression put in the above double quotation marks "", as far as the "rare earth-iron-nitrogen based magnetic material" specified by the above expression is concerned, the state coated with the ferrite-based magnetic material should be understood to be included therein.

The ferrite-based magnetic material coating the surface of a rare earth-iron-nitrogen based magnetic material include oxide-based magnetic materials including ferrite-based magnetic materials having a spinel structure having a composition of $(M',Fe)_3O_4$ as a main composition, such as Fe ferrites such as magnetite, maghemite and intermediates of magnetite and maghemite, Ni ferrites, Zn ferrites, Mn-Zn ferrites, Ni-Zn ferrites and Mg-Mn ferrites, iron garnet type magnetic materials such as $Y_3Fe_5O_{12}$, and soft magnetic ferrite-based magnetic materials such as soft magnetic hexagonal magnetoplumbite ferrites.

The M' component (in the preceding paragraph, a component contained in the general formula of ferrites having a spinel structure) denotes a metal element becoming divalent or monovalent from in the R component and the M component, and is specifically Sm, Eu, Yb, Co, Ni, V, Ti, Cr, Mn, Cu, Zn, Ga, Zr, Nb, Mo, Pd, Ag, Cd, In, Sn, Hf, Ta, W, Pb, Bi, an alkali metal or an alkali earth metal. The M component other than the M' component is contained in a ferrite coating layer in some cases.

Among the above-mentioned ferrite-based magnetic materials, ferrites having a spinel structure are preferable components as a ferrite coating layer because the ferrites well keep the chemical bond with the rare earth-iron-nitrogen based magnetic material surface and improve high magnetic characteristics and the antioxidative performance. Therefore, soft magnetic ferrite-based magnetic materials having a spinel structure are very preferable components in the composite magnetic material of the present invention, especially in a composite magnetic material for a high frequency wave.

The composite magnetic material of the present invention which has the composition described heretofore and in which a rare earth-iron-nitrogen based magnetic material phase is coated with a ferrite-based magnetic material phase has unique properties because the coating layer has a magnetization unlike silica or the like commonly used as a coating material.

The features of the composite magnetic material of the present invention will be described hereinafter.

Generally, the magnetic permeability of magnetic materials largely depends on the shapes of the materials.

A rare earth-iron-nitrogen based magnetic material having a nearly spherical shape (this is referred to as "a spherical rare earth-iron-nitrogen based magnetic material") generally has a high productivity and makes an inexpensive material.

However, such a spherical rare earth-iron-nitrogen based magnetic material has a large demagnetization coefficient N of 1/3 and generates a reversed magnetic field of $1/3 \times (\mu-1)H$ against an external magnetic field H. Therefore, under the condition that a reversed magnetic field is smaller than an external magnetic field, $\mu$ becomes $\mu<4$ in the state that magnetic grains are mutually sufficiently separated and isolated (however, this depends on the measurement method and condition), and this gives the upper limit in most cases and cannot fully bring out the intrinsic relative magnetic permeability. In contrast, a magnetic material having a high aspect ratio can achieve a higher magnetic permeability. In a material having an infinite aspect ratio in the direction of applying a magnetic field, N becomes 0 and $\mu \leqq \infty$, that is, the maximum relative magnetic permeability a magnetic material has can be brought out.

Here, the aspect ratio r is expressed by $r = h/\sqrt{A}$ where A represents a cross-sectional area of a solid body, and h represents a height of the solid body in the direction perpendicular to the area.

Hence, conventional metal-based magnetic materials for high frequency waves are made of thin pieces obtained by a ball mill or the like so as to devisingly make the aspect ratio r as large as possible.

Since the rare earth-iron-nitrogen based magnetic material of a component of the composite magnetic material of the present invention is a nitride and has a more brittle material than metal materials, in order to make the magnetic material of a material having a high aspect ratio, a particular production method must be employed. The magnetic material can therefore provide a material poor in cost performance, depending on applications, and is hardly applied to broad applications.

Then, it is conceived that even if each individual magnetic powder is a spherical rare earth-iron-nitrogen based magnetic material, these magnetic material grains are magnetically coupled by the exchange interaction. In this case, since the molding as a whole (or a part of a molding, and including a part of an aggregate of magnetic material grains; the aggregates of magnetic material grains further gather to constitute a molding as a whole.) behaves like one magnetic material, the magnitude of the demagnetizing field generated by the spherical rare earth-iron-nitrogen based magnetic material is allowed to approach a value of the demagnetizing field generated by the molding as a whole. If a molding itself is a material having a high aspect ratio r having a shape of a low demagnetizing field, or if the demagnetizing field of a molding is in a state of being near 0 as in the case where a closed magnetic path is formed, the magnetic permeability can be raised even if a spherical rare earth-iron-nitrogen based magnetic material which has a large demagnetizing field is used.

On the other hand, even if a material powder having a high aspect ratio or a molding thereof is provided, when it is made into a molding of a high filling factor, powers themselves are brought into contact with one another and made conductive, and consequently, as discussed in the explanation of the relational expression (4), a situation arises in which an eddy-current loss is liable to occur from a low frequency field similarly to a material having a large grain diameter.

Hence, in conventional metal-based magnetic materials for high frequency waves, the material is not only made of thin pieces so as to take an aspect ratio r as high as possible, but also the thin pieces need to be dispersed in a resin and isolated in a creative way.

According to the composite magnetic material of the present invention, since the rare earth-iron-nitrogen based magnetic material is coated with a ferrite-based magnetic material having a high electric resistivity, even if the magnetic material is made to be a material of a high filling, the powders themselves are not electrically coupled, bringing about a state that the eddy-current loss is hardly generated.

Rather, making the filling factor high to some degree to make the contact better and to promote the magnetic coupling through the coating layer of the ferrite-based magnetic material is preferable for the improvement in the magnetic permeability in cooperation with an increase in the volume fraction of the ferromagnetism component; and if a magnetic material having a high magnetic permeability is intended to be made, the volume fraction of the composite magnetic material is preferably 40% by volume or higher and 100% by volume or lower.

The electric insulating layer further has an effect of improving the magnetic permeability as well as an effect of enhancing the maximum absorption frequency $f_a$. This is caused by the facts that a higher degree of the insulation by a ferrite coating layer gives a narrower substantial region electrically coupled, and thus the frequency at which the eddy current is generated shifts to a higher frequency side according to the relational expression (4). Further, in a region where the thickness and/or the coating ratio of the ferrite coating layer is high enough for the ferrite coating layer to inhibit most of the eddy current crossing rare earth-iron-nitrogen based magnetic material grains, the decrease of $\mu$' and the increase of $\mu$" due to occurrence of the eddy current liable to be caused in a low frequency field are nearly completely suppressed, and thus the absorption in a higher frequency field near the resonant frequency $f_r$ of the rare earth-iron-nitrogen based magnetic material dominates, and the apparent $f_a$ shifts to a higher frequency side in some cases. Hence, the composite magnetic material of the present invention is a material remarkably suitable for high frequency applications and ultrahigh frequency applications, especially a magnetic material for a high frequency wave used at a frequency higher than around 10 GHz. In order to achieve a magnetic material for a high frequency wave which has $f_a$ exceeding 10 GHz and $\mu" \geqq 1$ using the rare earth-iron-nitrogen based magnetic material alone, there are difficulties with the selections of production conditions and compositions including establishing a production condition to make the nitrogen amount in a high nitriding range and the addition of an M component. However, the composite magnetic material for a high frequency wave having a ferrite coating layer of the present invention can easily fabricate such a magnetic material.

Therefore, the composite magnetic material of the present invention, since it is equipped with the coating layer of a ferrite-based magnetic material, makes a magnetic material for a high frequency wave more increased in both the magnetic permeability and the resonant frequency and more improved in the maximum absorption energy coefficient ($f\mu"_{max}$) than the rare earth-iron-nitrogen based magnetic material.

The present inventors refer to the situation that the rare earth-iron-nitrogen based magnetic material is magnetically coupled by the exchange interaction despite of being electrically insulated by the ferrite-based magnetic material as described above, as "electric insulation · magnetic coupling".

When the electric insulation of magnetic material grains is established, the electric resistivity of a molding itself rises in many cases, so the measurement of the electric resistivity of a molding can provide a measure for the quality of the electric insulation.

If the "electric insulation · magnetic coupling" of a rare earth-iron-nitrogen based magnetic material is achieved by the coating of a ferrite-based magnetic material, since there are provided an effect of making a magnetic material having a high magnetic permeability and an effect of enhancing the maximum absorption frequency $f_a$, electromagnetic noise absorbing materials as well as electromagnetic wave absorbing materials and materials for RFID tags can be produced. Further applications can be developed i) to materials for low frequency waves in which rare earth-iron-nitrogen based magnetic materials having a small grain diameter and a large grain diameter are mixed to raise the filling factor, and the electric insulation-magnetic coupling is held by a ferrite coating and which have a high magnetic permeability, and ii) to magnetic recording materials in which a rare earth-iron-nitrogen based magnetic material having a shape magnetic anisotropy is used and the electric insulation·magnetic coupling is held by a ferrite coating and the magnetization is made large, and the like.

In the ferrite coating layer, the ferrite-based magnetic material exemplified above may be mixed with perovskite type magnetic materials such as $LaFeO_3$, rutile type magnetic materials such as $CrO_2$, corundum and ilmenite type magnetic materials, manganites and chromites having magnetism, and magnetic materials based on oxides of V, Co, and the like, and may contain sub-phases and by-products of oxyoxides such as rare earth oxides, rare earth-iron oxides, hematites and goethites, but the volume fraction must not exceed the volume fraction of the ferrite-based magnetic material.

When the composite magnetic material in which a ferrite-based magnetic material is coated on the surface of the rare earth-iron-nitrogen based magnetic material of the present invention has a preferable composition range, in the composition represented by the general formula: $R_\alpha Fe_{(100-\alpha-\beta-\gamma)} N_\beta O_\gamma$ the preferable ranges of $\alpha$, $\beta$ and $y$ are selected so that three expressions of $0.3 \leqq \alpha \leqq 30$, $0.1 \leqq \beta \leqq 30$ and $0.1 \leqq \gamma \leqq 75$ in % by atom can be simultaneously satisfied. The oxygen amount of less than 0.1% by atom is not preferable because the thickness of the ferrite coating layer is not sufficient and the electric resistivity is not sufficiently improved, and exceeding 75% by atom is not preferable because a composite magnetic material having high magnetic characteristics, particularly a composite magnetic material for a high frequency wave, cannot be made. The more preferable range is $0.5 \leqq \alpha \leqq 30$, $0.2 \leqq \beta \leqq 30$ and $0.2 \leqq \gamma \leqq 50$, which makes a material having balanced magnetic characteristics and electric resistivity. Here, 0.01 to 50% by atom of Fe may be substituted with an M composition.

The thickness of the ferrite coating layer must be 0.8 to 10,000 nm. With the thickness of less than 0.8 nm, the electric resistivity of the composite material hardly becomes large and the magnetic properties of the ferrite coating layer cannot fully be exhibited, which are not preferable. With that exceeding 10,000 nm, even if the electric resistivity can be fully secured, the ferrite coating layer often has a lower magnetization than the R-Fe-N based magnetic material. Therefore, the magnetization of a composite magnetic material for a high frequency wave decreases, which cannot make a high-performance composite magnetic material for a high frequency wave.

Further, the preferable thickness range of the ferrite coating layer is as follows. The range is such that the ferrite coating layer has thinness to dominate superparamagnetic property as well as the ferrite coating layer has thickness not to dilute an influence of the anisotropy originated from the hard magnetic phase due to the exchange interaction, especially the in-plane magnetic anisotropy on the resonant frequency, that is, a range of 2 to 1,000 nm. In either of the range of less than 2 nm and the range exceeding 1,000 nm, the magnetic permeability of the composite magnetic material in a high frequency field has a tendency to decrease.

Thus, in order for the composite magnetic material for a high frequency wave to have a high electric resistivity, suppressing the grain diameter of an R-Fe-N based magnetic material smaller to make the specific surface area thereof larger is advantageous; however, a too small average grain diameter may not make a high-performance magnetic material for a high frequency wave due to a decrease in the magnetization. That is, a balance between the average grain diameter (R) of the R-Fe-N based magnetic material and the thickness ($\delta$) of the ferrite coating layer is important, and they are preferably selected from the range of $0.00001 \leqq \delta/R \leqq 10$ depending on various types of applications.

The thickness of a ferrite coating layer can be mostly determined as a one-significant figure value by observation of cross-sections of a composite magnetic material for a high frequency wave using a scanning electron microscope (SEM) or a transmission electron microscope (TEM). When the composite magnetic material for a high frequency wave is a powder and has a thickness of the ferrite coating layer of 10 nm or more, the average grain diameters before and after ferrite coating are determined by the method as described above and the thickness is confirmed as a value half the difference therebetween. The thickness of the ferrite coating layer of the present invention is an average value thereof, but even if the surface coating ratio deviates largely from 100% and is less than 90%, an average value as would be the case with the surface coating ratio of 100% is determined. That is, with respect to a value of the thickness of a ferrite coating layer in this case, determination by calculation from the volume fraction of the ferrite coating layer with respect to the whole and the specific surface area of the rare earth-iron-nitrogen based magnetic material can provide a more exact value. Of course, even if the surface coating ratio is 100%, this method is applicable, and the thickness of the ferrite coating layer can be known in two or more significant figures in some cases if the physical amounts used for the calculation have good precisions.

In the case where the composite magnetic material for a high frequency wave is molded and the ferrite coating layer makes a continuous phase, the half of the average thickness of the continuous layer is the thickness of the ferrite coating layer; however, it is commonly a convenient method in which the cross-section of the composite magnetic material molding for a high frequency wave is observed; the volume fractions of the grain interfacial phase composed of the ferrite-based magnetic material and the main phase of the rare earth-iron-nitrogen based magnetic material are obtained; and $\delta$ is calculated from the values and the grain diameter or the specific surface area of the rare earth-iron-nitrogen based magnetic material.

Then, an identification method of a ferrite coating layer of the composite magnetic material for a high frequency wave in the present invention will be described.

In the case of a sufficiently thick ferrite coating layer, the identification can be conducted using a common X-ray diffractometry. However, in the range where $\delta/R$ is 0.1 or less and $\delta$ is less than 200 nm, since the rare earth-iron-nitrogen based magnetic material has a high crystallinity and a low symmetry of crystals in many cases, a number of diffraction peaks having high intensities emerge in the diffraction pattern of the composite magnetic material. In this case, the diffraction peak of the ferrite coating layer is hidden, thereby making the identification by X-ray diffractometry difficult in some cases. In other words, for the identification of a rare earth-iron-nitrogen based magnetic material, use of X-ray diffractometry can be said to be suitable.

Under the situations described above, a method is effective in which a composite magnetic material is made into thin pieces and only a ferrite coating layer is identified by electron beam diffractometry and energy dispersive X-ray analysis (EDX). A high-precision analysis can be conducted if the wavelength of the electron beam is the thickness or less of a ferrite coating layer, or does not exceed 10 times the thickness even if exceeding the thickness of the ferrite coating layer.

As an example, in the case of the thickness of a ferrite coating layer of approximately 100 nm, the following conditions are preferable. They are a camera length: 0.2 m, an acceleration voltage: 200 kV, an electron beam wavelength: 0.00251 nm, and an electron beam diameter: 50 nm.

The surface coating ratio is controlled in the range of 50% to 100%. With the ratio of less than 50%, the electric conduction through between grains is caused, and the surface coating does not contribute to the rise of the electric resistivity. Further, since the eddy current crossing between grains is caused, an effect of reducing the loss becomes poor.

The surface coating ratio is preferably 80% or more, and more preferably 90% or more. In the case of applying the composite magnetic material of the present invention to a high-porosity and light magnetic material for a high frequency wave, the surface coating ratio is still more preferably 95% or more. The ideal coating state is a coating ratio of 100%. The surface coating ratio can be quantitatively determined using an electron beam microanalyzer (EPMA).

Next, the magnetic material-resin composite material for a high frequency wave of the present invention will be described.

Usable resin components of a magnetic material-resin composite material for a high frequency wave are exemplified as follows.

They include, for example, polyamide resins such as 12-nylon, 6-nylon, 6,6-nylon, 4,6-nylon, 6,12-nylon, amorphous polyamide and semiaromatic polyamide; polyolefinic resins such as polyethylene, polypropylene and chlorinated polyethylene; polyvinylic resins such as polyvinyl chloride, polyvinyl acetate, polyvinylidene chloride, polyvinyl alcohol and ethylene-vinyl acetate copolymers; acrylic resins such as ethylene-ethyl acrylate copolymers and polymethyl methacrylate; acrylonitrile resins such as polyacrylonitrile and acrylonitrile/butadiene/styrene copolymers; various types of polyurethane resins; fluororesins such as polytetrafluoroethylene; synthetic resins called engineering plastics such as polyacetal, polycarbonate, polyimide, polysulfone, polybutylene terephthalate, polyarylate, polyphenylene oxide, polyether sulfone, polyphenyl sulfide, polyamidoimide, polyoxybenzylene and polyether ketone; thermoplastic resins containing liquid crystal resins such as whole aromatic polyesters; conductive polymers such as polyacethylene; thermosetting resins such as epoxy resins, phenol resins, epoxy-modified polyester resins, silicone resins and thermosetting acrylic resins; and elastomers such as nitrile rubber, butadiene-styrene rubber, butyl rubber, nitrile rubber, urethane rubber, acrylic rubber and polyamide elastomers.

Resin components of the magnetic material-resin composite material for a high frequency wave of the present invention are not limited to the resins exemplified above, but if at least one kind of the above exemplified resins is contained, a magnetic material-resin composite material can be made which has a high electric resistivity and excels in impact resistance, flexibility and moldability. The content of the resin components is preferably in the range of 0.1 to 95% by mass. The content of the resin components of less than 0.1% by mass exhibits almost no effect of the resins such as impact resistance; and exceeding 95% by mass extremely drops the magnetic permeability and magnetization, and gives poor usefulness as a magnetic material-resin composite material for a high frequency wave, which is not preferable.

Particularly in the case where the magnetic material component is a rare earth-iron-nitrogen based magnetic material, since the ferrite coating layer does not have the effect of electric insulation, the content of resin components is preferably 1 to 95% by mass in some cases.

Further, in the case where the magnetic material components are all of the magnetic materials of the present invention, and in applications requiring especially a high magnetic permeability and an impact resistance, the range of 2 to 90% by mass is more preferable, and the range of 3 to 80% by mass is most preferable for the same reason as described above.

In the magnetic material-resin composite material for a high frequency wave of the present invention, the content of magnetic material components is preferably 5 to 99.9% by mass, more preferably 5 to 99% by mass, still more preferably 10 to 98% by mass, and most preferably 20 to 97% by mass. The content of the magnetic material components of less than 5% by mass extremely drops the magnetic permeability and magnetization, and gives poor usefulness as a magnetic material for a high frequency wave; and exceeding 99.9% by mass exhibits almost no effect of the resins such as impact resistance, which are not preferable.

In the magnetic material-resin composite material for a high frequency wave of the present invention, the rare earth-iron-nitrogen based magnetic material and/or the rare earth-iron-nitrogen based magnetic material surface-coated with the ferrite-based magnetic material of the present invention is responsible for many parts of electromagnetic characteristics. And, when applied to magnetic materials for high frequency waves, electromagnetic noise absorbing materials, electromagnetic wave absorbing materials, materials for RFID tags and the like, imparts performances , such as impact resistance, flexibility, moldability and high electric resistivity, features of the resins are given to the magnetic material of the present invention to improve the usefulness. Therefore, if a resin composition does not so much inhibit performances of the high frequency magnetic material of the present invention, and is one which imparts "some features intrinsic to a resin", the resin composition can be said to be a very suitable composition of the magnetic material-resin composite material for a high frequency wave of the present invention.

The above-mentioned "some features intrinsic to a resin" is not limited to the features exemplified above and includes features and performances of every well-known resin.

The rare earth-iron-nitrogen based magnetic material of the present invention can be applied to applications other than magnetic materials for high frequency waves by electrically insulating the rare earth-iron-nitrogen based magnetic material with a resin component. Particularly in the case where Sm is limited in less than 50% by atom, applications can be usefully developed, including i) materials for low frequency waves in which rare earth-iron-nitrogen based magnetic materials having a small grain diameter and a large grain diameter are mixed to raise the filling factor, the electric insulation is held by a resin, and an excellent magnetic permeability is developed; and ii) magnetic recording materials in which a rare earth-iron-nitrogen based magnetic material having a shape magnetic anisotropy is used, and the electric insulation is held by a resin, the magnetization is made large, and the like, and this insulated magnetic material is included in one of magnetic material-resin composite materials of the present invention. However, if a magnetic material-resin composite material is constituted so as to provide a sufficient electric insulation in the case where a ferrite plating is not applied, a sufficient magnetic coupling cannot be formed, and a limit to the magnetic permeability occurs, a material of a low performance is made, and the usable application range is limited.

The magnetic material-resin composite material of the present invention can be added with a titanium or silicone coupling agent. Generally, much addition of a titanium coupling agent improves flowability and moldability, resulting in allowing for the increase of the formulation amount of a magnetic powder, exhibiting improved orientability when magnetic field orientation is carried out and providing a material excellent in magnetic characteristics.

On the other hand, use of a silicone coupling agent provides an effect of increasing mechanical strengths, but generally worsens flowability. Both the agents can be added and mixed in order to make the best use of the both. Further, in addition to a titanium- and silicone-coupling agents, an aluminum-, a zirconium-, a chromium-, and an iron-coupling agent may be added.

The magnetic material-resin composite material of the present invention may further be blended with various types of lubricants, heat-aging resistant agents and antioxidants.

Then, production methods of the magnetic material and the magnetic material-resin composite material of the present invention will be described, but are not especially limited thereto.

On detailed description of production methods, particularly a method for providing "a magnetic material for a high frequency wave" of the present invention is specifically exemplified to the effect.

In the present invention, "an alloy substantially composed of an R component and an Fe component" is an alloy containing an R component and an Fe component as main components, and it may contain another atom shown in the above aspect (4) of the present invention substituting Fe of the Fe component. And, it refers to such an alloy that it is treated with ammonia gas or nitrogen gas and subjected to fine pulverization and the like to obtain an alloy capable of becoming the rare earth-iron-nitrogen based magnetic material of the present invention, and refers to such an alloy that it is subjected to a ferrite coating treatment to obtain the composite magnetic material coated with the ferrite-based magnetic material. This alloy also refers to a rare earth-iron (R-Fe) based alloy, a raw material alloy, or a base alloy in the present invention.

(1) Preparation process of a base alloy

As a production method of an R-Fe based alloy, any of production methods may be used including: (I) a high frequency melting method in which each metal component of R and Fe components is melted by a high frequency wave and cast in a mold or the like; (II) an arc melting method in which metal components is charged in a boat made of copper or the like and melted by arc discharge; (III) a drop casting method in which molten metal melted by arc is dropped in a water-cooled mold at a stroke to be quenched; (IV) a super quenching method in which molten metal melted by a high frequency wave is dropped on a rotating copper roll to obtain a ribbon-like alloy; (V) a gas atomizing method in which molten metal melted by a high frequency wave is sprayed to obtain an alloy powder; (VI) an R/D method in which powders of an R component and/or an M component, or an Fe-M alloy powder, and oxide powders of an Fe component and/or an M component, and a reducing agent are reacted at a high temperature to reduce the R component or the R and M component while the R component or the R and M components are diffused in the Fe component and/or the Fe-Mn alloy powder; (VII) a mechanical alloying method in which each single metal component and/or an alloy is reacted while fine pulverized by a ball mill or the like; and (VIII) an HDDR (Hydrogenation Decomposition Desorption Recombination) method in which an alloy obtained by one of the methods described above is heated in a hydrogen atmosphere to once decompose the alloy into hydrides of R and/or M, and an Fe component and/or an M component or an Fe-M alloy, and thereafter, the decomposed resultants are recombined at a high temperature and a low pressure while hydrogen is purged, to make an alloy.

In the case of using the high frequency melting method or the arc melting method, a composition composed of Fe as a main component is liable to deposit when an alloy is solidified from a melt state, and the volume fraction of the composition having the maximum absorption frequency in a low frequency field particularly even after subjected to a nitriding process increases, and the reduction of the absorption in a high frequency field and further in an ultrahigh frequency field occurs. Then, in order to eliminate the composition composed of Fe as a main component and to increase the rhombohedral or hexagonal crystal structure, the alloy is effectively annealed in a gas containing at least one of inert gases such as argon and helium, and hydrogen gas, or in vacuum in the temperature range of 200 to 1,300°C, preferably in the range of 600 to 1,185°C. The alloy fabricated by this method has a larger crystal grain diameter and a more favorable crystallinity, and a higher magnetic permeability than the case using the super quenching method or the like. Therefore, this alloy contains a large amount of the homogeneous main raw material phase, which is preferable as a base alloy to provide the magnetic material of the present invention.

Among the magnetic materials for high frequency waves of the present invention, if a rare earth-iron-nitrogen based magnetic material is an in-plane magnetic anisotropic material and especially a flat powder which can have a low demagnetization coefficient of the rare earth-iron-nitrogen based magnetic material itself, it is very preferable to make a magnetic material exhibiting a high magnetic permeability in an ultrahigh frequency field. In a super quenched material obtained by the method (IV), by preparing kinds and compositions of an R component in specific ranges, by arranging conditions such as the roll rotation frequency, roll diameter, roll width, linear speed, chamber pressure, jetting-out pressure, its differential pressure, the cylinder diameter, orifice diameter, gap length and metal tapping temperature, and by regulating the ribbon thickness and width, a raw material base alloy is made into a flat powder to make low the demagnetizing field of a final composite magnetic material, which can contribute to the improvement in the magnetic permeability of the composite magnetic material of the present invention.

Further, a composite magnetic material for a high frequency wave is desirably made whose c plane is oriented in the magnetic field direction of an electromagnetic wave to be absorbed. Therefore, if a state is established in which the c plane is oriented in the flatness direction of the flat powder and the flatness direction is aligned in a certain direction of an absorbing body or an absorbing sheet, a further ideal magnetic material for a high frequency wave is made. In a super quenched material obtained by the method (IV), also in the case of orienting the c plane, arranging kinds and compositions of an R component and the super quenching condition is important.

The R preferable to promote the orientation is a composition containing at least one of Y, Ce, Pr, Nd, Gd, Dy and Er.

Further, a rare earth-Fe alloy may be mixed with a ferromagnetic element such as Fe, Co or Ni, a cubic metal element such as A1, V, Cr, Mn, Cu, Zn, Nb, Mo, Ag, Sn, Ta, W, Ir, Pt, Au or Pb, or an alloy or solid solution thereof, and rolled to produce a flat ribbon-like alloy raw material; or the ribbon may further be pulverized to make a flat powder.

(2) Coarse pulverization and classification process

Although the alloy ingot fabricated by the method described above and an alloy powder by R/D method or HDDR method can be nitrided directly, if crystal grains are larger than 2,000 $\mu$m, the nitriding treatment necessitates a long time; therefore, it is more efficient to carry out the nitriding after coarse pulverization. Coarse pulverization into 200 $\mu$m or less further improves the nitriding efficiency, which is especially preferable.

The coarse pulverization is carried out using a jaw crusher, a hammer, a stamp mill, a rotor mill, a pin mill, a coffee mill or the like. Further, use of a crusher such as a ball mill or a jet mill can prepare alloy powders suitable for nitriding, depending on conditions. A method in which a base alloy is made to occlude hydrogen and then pulverized by a crusher described above and a method in which hydrogen is repeatedly occluded and released for powdering, may be used.

It is effective to carry out a more homogeneous nitriding that after the coarse pulverization, a grain size regulation is further performed using a vibrational or acoustic classifier, a cyclone or the like. Annealing in an inert gas or hydrogen after the coarse pulverization and the classification is effective in some cases because structural defects can be removed.

EP 2 146 357 B1

Heretofore, preparation methods of the present invention of powder raw materials or ingot raw materials of R-Fe based alloys have been exemplified. However, depending on the crystal grain diameter, pulverized grain diameter, surface condition and the like, there are differences in optimum conditions of nitriding described below.

(3) Nitriding and annealing process

Nitriding is a process in which a gas containing a nitrogen source such as ammonia gas and nitrogen gas is brought into contact with an R-Fe alloy powder or an ingot obtained in the process (1) or the processes (1) and (2) described above to incorporate nitrogen into a crystal structure.

At this time, making hydrogen coexist in the nitrogen atmosphere gas is preferable in that the nitriding efficiency is high and additionally nitriding can be carried out with keeping the stability of the crystal structure. In order to control the reaction, an inert gas such as argon, helium or neon is made to coexist in some cases. The most preferable nitriding atmosphere is a mixed gas of ammonia and hydrogen; especially if the ammonia partial pressure is controlled in the range of 0.1 to 0.7, the nitriding efficiency is high and further, magnetic materials covering the whole nitrogen amount range shown in the aspect (2) of the present invention can be fabricated.

The nitriding reaction can be controlled by the gas composition, heating temperature, heating time and pressurizing pressure. The heating time, depending on the base alloy composition and the nitrogen atmosphere, is desirably selected in the range of 200 to 650°C. With the hating temperature of less than 200°C, the nitriding rate is very slow; with that exceeding 650°C, the main raw material phase is decomposed and nitriding with the rhombohedral or hexagonal crystal structure held is impossible. In order to raise the nitriding efficiency and the content of the main phase, the more preferable temperature range is 250 to 600°C.

Annealing in an inert gas and/or hydrogen gas after the nitriding is preferable in view of improving magnetic characteristics. Particularly, producing an R-Fe-N based magnetic material in a highly nitrided region of the nitrogen amount of 16 to 25% by atom and thereafter annealing it in an atmosphere containing hydrogen gas is a very preferable method in view of improving the magnetic permeability and the magnetization.

Nitriding and annealing apparatuses include a horizontal or vertical tubular furnace, a rotary reaction furnace and a closed reaction furnace. Any of the apparatuses can prepare the magnetic material of the present invention, but particularly in order to obtain a powder having an even nitrogen composition distribution, a rotary reaction furnace is preferably used.

A gas used in the reaction is supplied through a gas flow system in which a gas flow of 1 atm or higher is fed into a reaction furnace with the gas composition kept at a constant, an enclosing system in which a gas is enclosed in a vessel at a pressure of 0.01 to 70 atm, or a combination thereof.

Through the nitriding and annealing process described above, an R-Fe-N based magnetic material is fabricated for the first time.

(4) Fine pulverization process

A fine opulverization process is a process carried out in the case where an R-Fe-N based magnetic material described above is pulverized into more fine micropowders Methods of fine pulverization used are, other than the methods recited in the process (2) described above, dry and wet fine pulverization apparatuses such as a rotary ball mill, vibration ball mill, planetary ball mill, wet mill, jet mill, pin mill and automatic mortar, and combinations thereof. When an O component and an H component are incorporated, methods of regulating the incorporation in the range according to the present invention include a method in which the moisture content and the oxygen concentration in a fine pulverization atmosphere are controlled.

For example, in the case of using a dry crusher such as a jet mill, the moisture content in a pulverizing gas is kept at 1 ppm to 1% and the oxygen concentration is kept at a predetermined concentration in the range of 0.01 to 5%. In the case of using a wet crusher such as a ball mill, the moisture content in ethanol or another pulverizing solvent is controlled at 0.1 ppm by mass to 80% by mass and the oxygen content is controlled in an appropriate range such that the dissolved oxygen is regulated in the range of 0.1 ppm by mass to 10 ppm by mass.

The oxygen content can be also controlled by handling and operating fine pulverized grains in a glove box or a vessel in which the oxygen partial pressure is variously controlled, or by an operation of leaving the grains in a predetermined time. Since the material of the present invention is , even in a micrograin form, more stable than and superior in pulverizability to metal-based magnetic materials being non-nitrides, even grains having a grain diameter exceeding 30 $\mu$m after the nitriding treatment can be regulated to 0.1 to 30$\mu$m according to the fine pulverization method described above. However, in the case of emphasizing an industrial cost merit, it is important that the diameter is regulated in the range of 0.2 $\mu$m or more.

Thereafter subjecting the powder surface to modification by a surface modifying machine such as a hammer mill or various types of surface treatments such as acid treatment, alkali treatment, cleaning treatment and degreasing

22

treatment makes more effective the surface coating treatment with a ferrite-based magnetic material as a post-process in some cases, and is finally effective to improve the electric insulation · magnetic coupling between powders and the antioxidative performance.

The production method of the rare earth-iron-nitrogen based magnetic material of the present invention most preferably uses processes including preparing a base alloy of an R-Fe component composition by the method exemplified in the process (1) or the processes (1) and (2), nitriding by the method shown in the process (3), and fine pulverizing by the method shown in the process (4). Particularly, heat-treating a raw material alloy obtained in the process (1) or a raw material alloy obtained by pulverizing and classifying the raw material alloy of (1) by the method shown in the process (2) in an atmosphere containing at least one of inert gases and hydrogen gas at 600 to 1,300°C, then subjecting the heat-treated alloy to an anneal-treatment of a heat-treatment in the range of 200 to 650°C, and thereafter carrying out a nitriding, can provide a magnetic material exhibiting an outstandingly low deterioration of magnetic characteristics due to in-powder oxidation.

The above is an explanation of the production method of the R-Fe-N based magnetic material of the present invention, but in the case of producing the R-Fe-N based magnetic material coated with the ferrite-based magnetic material of the present invention, a ferrite coating treatment process (5) is preferably undergone successive to the above. Particularly in order to applying the magnetic material of the present invention as a practical magnetic material-resin composite material for a high frequency wave, an orientation and molding process (6) is undergone in some cases in addition to the above. Particularly in order to improve the magnetic permeability of the magnetic material of the present invention, effective methods of magnetic field orientation among the above processes will be described in detail.

(5) Ferrite coating treatment process

Methods of coating a ferrite-based magnetic material on the surface of the rare earth-iron-nitrogen based magnetic material obtained by up to the process (4) described above, particularly a "ferrite plating method" effective to coating a ferrite having a spinel structure among the methods, will be described in detail.

Methods of incorporating a ferrite coating layer are a mixing method, a vapor deposition method, a sputter method, a pulse laser deposition method, a plasma flash method, and electrolytic or electroless plating methods including a ferrite plating method, a method in which a layer of a ferrite-based magnetic material powder is formed on the surface of an R-Fe-N based magnetic material powder using a surface modifying machine such as a hammer mill, and further, depending on conditions, a plasma jet method.

Methods of producing a material capable of being made of a high performance by magnetic field orientation, which is one of features of the present invention, include a ferrite surface coating method of a rare earth-iron-nitrogen based magnetic material by the ferrite plating method. In the case where the ferrite-based magnetic material being a coating layer of the present invention is a ferrite having a spinel structure, the ferrite-based magnetic material is preferably bonded to and coated on the surface of a rare earth-iron-nitrogen based magnetic material by the ferrite plating method.

According to the ferrite plating method, a coating phase of the ferrite-based magnetic material and a powder phase becoming nuclear grains of the rare earth-iron-nitrogen based magnetic material are chemically and strongly bonded. Therefore, a magnetic coupling therebetween can be provided, and further an effect of improving the antioxidative performance of the rare earth-iron-nitrogen based magnetic material phase can be also provided due to an oxide coating like a ferrite stable in the air. For the ferrite plating method, well-known methods can be utilized and disclosed, for example, in M. Abe, Journal of the Magnetics Society of Japan, vol.22, No.9, 1225 (1998) (hereinafter, referred to as "NON-PATENT DOCUMENT 6"), WO 2003/015109 (hereinafter, referred to as "PATENT DOCUMENT 5").

The "ferrite plating method" was found by Abe et al. of the present inventors, and is applied not only to the powder surface plating but to thin films; and its reaction mechanism is disclosed in NON-PATENT DOCUMENT 6; but the method is defined as a "method of directly forming a ferromagnetic and crystalline ferrite-based magnetic material on a powder surface by a reaction in an aqueous solution at 100°C or lower" (the temperature condition and the basis of the in-water reaction field should be referred to the 16th line in left column of NON-PATENT DOCUMENT 6.).

Hereinafter, a method of coating a ferrite-based magnetic material having a spinel structure on a rare earth-iron-nitrogen based magnetic material will be exemplified.

The method includes acid-treating the R-Fe-N based magnetic material surface with an acid surface treating solution to remove the surface oxide film, dispersing the treated material in water, and thereafter dropwise charging a reaction solution and a pH adjusting solution into the dispersion in the air at room temperature under an ultrasound excitation or under mechanical stirring at a suitable intensity or frequency to gradually shift pH of the solution from an acidic to an alkali region and to coat the ferrite-based magnetic material on the surface of the R-Fe-N based magnetic material. Since the above method has simple processes, it is an inexpensive method. The ferrite plating method of the present invention is not of course limited to the above, but since the surface treating solution, the reaction solution and the pH adjusting solution used here are essential components for ferrite plating, supplemental explanation will be described according to the above processes hereinafter.

The surface treating solution is preferably an acidic solution, and usable are aqueous solutions of inorganic acids such as hydrochloric acid, nitric acid, sulfuric acid and phosphoric acid, metal salts such as an iron chloride solution and a nickel chloride solution, and double salts and complex salts thereof, and organic acid aqueous solutions, and further combinations thereof. With pH of less than 0, since a rare earth-iron-nitrogen based magnetic material rapidly dissolves in some cases, pH is desirably controlled at 0 or higher and less than 7. The especially preferable pH range is 2 or higher and less than 7 in order to mildly perform the surface treatment to hold the unnecessary elusion of the R-Fe-N based magnetic material to the minimum. As a pH region balanced between the surface treatment rate and the yield, pH is more preferably 3 or higher and less than 6.5.

Then, as a solvent used in a reaction field, organic solvents can be used, but water needs to be included therein so as to ionize inorganic salts.

As for the reaction solutions, usable are solutions containing water as a main component and inorganic salts of the M' component including chlorides such as iron chloride, nickel chloride and manganese chloride, nitrates such as iron nitrate, nitrites, sulfates, and phosphates, and in some cases, solutions containing water as a main component and organic acid salts. Further, they may be combinations thereof. The reaction solution must essentially contain iron ions. With respect to iron ions in the reaction solution, any of the cases is acceptable where divalent iron ($Fe^{2+}$) ions only are contained, where a mixture thereof with trivalent iron ($Fe^{3+}$) ions is contained, and where trivalent iron ($Fe^{3+}$) only are contained, but in the case of $Fe^{3+}$ ions only, there must be contained di- or less valent metal ions of the M' component elements.

The pH adjusting solutions include alkali solutions of sodium hydroxide, potassium hydroxide, sodium carbonate, sodium hydrogencarbonate, ammonium hydroxide and the like, acidic solutions such as hydrochloric acid, and combinations thereof. Use of a pH buffer solution such as an acetic acid-sodium acetate mixed solution, and addition of a chelate compound are possible.

Generally, an oxidizing agent is not necessarily essential, but in the case where a reaction solution contains $Fe^{2+}$ only, an oxidizing agent is an essential component. The oxidizing agents are exemplified by nitrites, nitrates, hydrogen peroxide solutions, chlorates, perchloric acid, hypochlorous acid, bromates, organic peroxides, dissolved oxygen water and combinations thereof. It is effective that the state in which dissolved oxygen functioning as an oxidizing agent is continuously supplied to a ferrite plating reaction field by stirring it in the air or in an atmosphere whose oxygen concentration is controlled is held to control the reaction. Also, by introducing continuously or temporarily an inert gas such as nitrogen gas or argon gas by bubbling the reaction field to restrict the oxidation action of oxygen, the reaction can be stably controlled without inhibiting the effect of the other oxidizing agent.

In the typical ferrite plating method, the formation of a ferrite coating layer progresses by the reaction mechanism as follows. A reaction solution contains $Fe^{2+}$ ions, which are adsorbed to OH groups of a powder surface to release $H^+$. Then, oxidation reaction by oxygen in the air, an oxidizing agent or an anode current ($e^+$) oxidizes part of adsorbed $Fe^{2+}$ ions to $Fe^{3+}$ ions. $Fe^{2+}$ ions, or $Fe^{2+}$ ions and $M'^{2+}$ ions in the solution are again adsorbed on metal ions which have been already adsorbed and $H^+$ is released accompanied by hydrolysis to produce a ferrite phase having a spinel structure. Since OH groups are present on the ferrite layer surface, metal ions are again adsorbed; the same process is thus repeated to grow a ferrite coating layer.

In the reaction mechanism, in order to directly change from $Fe^{2+}$ ions to a ferrite of a spinel structure, for example, magnetite, the reaction system needs to be slowly shifted from a stable region for $Fe^{2+}$ to a region where magnetite is deposited by regulating pH and the redox potential so as to cross a line dividing $Fe^{2+}$ ions and magnetite by an equilibrium curve in the pH-potential diagram of Fe. In the case where ions of M' component elements such as $M'^{2+}$ ions are contained, the same discussion can be made using a pH-potential diagram corresponding to the composition and the temperature, or by a prediction. Therefore, the functions of a pH adjusting agent and an oxidizing agent are very important; kinds, concentrations and adding methods thereof have large influences on the result of the reaction of whether a ferrite phase is produced, and the purity of the ferrite coating layer.

Other factors deciding the reaction include the dispersion state and the reaction temperature of an R-Fe-N based magnetic material.

In order to smoothly perform the surface reaction of an R-Fe-N based magnetic material, or in order to prevent the aggregation thereof, dispersion of the R-Fe-N based magnetic material into a solution is very important. But any of well-known methods or a combination thereof are used depending on the target reaction control, the methods including a method of simultaneously using ultrasonic dispersion and a reaction excitation, a method of transporting and circulating a dispersion liquid by a pump, and a method of simply stirring by a stirring blade or a rotary drum or swinging or vibrating by an actuator or the like.

For the control of the reaction, the temperature is important. The reaction temperature to strengthen the chemical bond of a rare earth-iron-nitrogen based magnetic material phase and a ferrite-based magnetic material phase can generally be selected from a temperature of 650°C or lower in the range where the R-Fe-N based magnetic material does not thermally decomposed, but since the ferrite plating method is a reaction in the coexistence with water, the temperature is preferably between 0 and 100°C, which is from the freezing point to the boiling point of water under the atmospheric pressure. Particularly, according to the method, since the reaction proceeds sufficiently even nearly at room temperature, an application example is conceivable in which an R-Fe-N based magnetic material is subjected to ferrite plating in the coexistence with a biological substance.

In the present invention, a method in which a whole system is placed under a high pressure and plating is performed in the temperature range exceeding 100°C, for example, the supercritical reaction, does not belong to the ferrite plating method. But, if the ferrite coating layer exhibiting the effect of the present invention is formed on the surface of the rare earth-iron-nitrogen based magnetic material, it naturally belongs to a composite magnetic material of the present invention.

As a reaction excitation method other than temperature and ultrasonic wave, pressure and optical excitation are effective in some cases.

Further, in the present invention, in the case where an aqueous solution containing $Fe^{2+}$ is used as a reaction solution and the ferrite plating method is applied, especially in the case where even if a ferrite coating layer is other than magnetite, an intermediate of magnetite and maghemite, and an Fe ferrite, when the reaction is performed under the condition that Fe is mixed as divalent ions in the ferrite coating layer, it is important that divalent ions of Fe are observed in a finally produced ferrite coating layer of the composite magnetic material of the present invention. The amount is preferably 0.05 or more and 0.5 or less in $Fe^{2+}/Fe^{3+}$ ratio. As a method for identifying this, an electron microanalyzer (EPMA) is effectively used. An R-Fe-N based magnetic material and the surface of a composite magnetic material coated with a ferrite-based magnetic material are analyzed by EPMA to obtain X-ray spectra of $FeL_{\alpha}$-$FeL_{\beta}$; the difference between the above two materials is taken; and the amount of $Fe^{2+}$ ions in the surface coating ferrite phase can be identified by comparing with spectra of standard samples of iron oxide containing $Fe^{2+}$ (for example, magnetite) and iron oxide containing only $Fe^{3+}$ (for example, hematite and maghemite).

At this time, the measurement conditions of EPMA are acceleration voltage: 7 kV, measurement diameter: 50 $\mu$m, beam current: 30 nA and measurement time: 1 sec/step.

(6) Orientation and molding process

The magnetic material of the present invention is used for various applications by solidifying a rare earth-iron-nitrogen based magnetic material and/or a rare earth-iron-nitrogen based magnetic material coated with a ferrite-based magnetic material only, or by adding a metal binder, another magnetic material and a resin thereto and molding the mixture, or otherwise. Particularly if a resin described above is blended, the magnetic material-resin composite material of the present invention can be provided. In the case where the magnetic material of the present invention is an anisotropic material, if the magnetic field orientation operation is carried out at least once in the molding process, a magnetic material or a magnetic material-resin composite material having high magnetic characteristics is made, which is especially preferable.

Methods for solidifying a rare earth-iron-nitrogen based magnetic material and/or a rare earth-iron-nitrogen based magnetic material coated with a ferrite-based magnetic material only include a method in which the material is put in a mold, and pressure-powder molded in cold for use as it is, and also a method in which successively, the molding is subjected to rolling in cold, forging, shock compression molding or the like for molding, but in many cases, the method involves sintering the material for molding while subjecting it to a heat treatment at a temperature of 50°C or higher. The heat treatment atmosphere is preferably a non-oxidizing atmosphere, and the heat treatment is favorably performed in an inert gas including rare gas such as argon or helium and nitrogen gas, or in a reducing gas including hydrogen gas. The heat treatment, under the temperature condition of 500°C or lower, can be performed even in the air. The sintering may be performed at ordinary pressure or under a pressurization or even in vacuum.

This heat treatment may be performed simultaneously with the pressure-powder molding, and the magnetic material of the present invention can be also molded by a pressure sintering such as hot pressing, HIP (hot isostatic pressing) and further SPS (spark plasma sintering). In order to make large the pressurization effect to the present invention, the applied pressure in the heating and sintering process must be in the range of 0.0001 to 10 GPa. With the pressure of less than 0.0001 GPa, since the effect of the pressurization is poor and obtained electromagnetic characteristics does not make a difference from those in atmospheric sintering, the pressure sintering is disadvantage corresponding to a dropped productivity. When exceeding 10 GPa, since the pressurization effect saturates, an excessive pressurization only drops the productivity, which makes no significance.

There is a possibility that a large pressurization imparts an induced magnetic anisotropy to a magnetic material to worsen a high magnetic permeability the magnetic material intrinsically has, and to put the maximum absorption frequency out of a preferable range. Therefore, the range of applied pressure is preferably 0.001 to 1 GPa, and more preferably 0.01 to 0.1 GPa.

Among hot press methods, the ultrahigh pressure HP method in which hot press is performed by placing a pressure-powder molded body in a capsule that can deform plastically and applying a large pressure from the uni- to triaxial directions and heat treating, different from a hot press method in which the pressure heat treatment is performed in a superhard or carbon mold using a uniaxial compression machine, can apply a pressure of 2 GPa or higher, which is hardly applied even using a tungsten carbide superhard mold, to a material with no trouble of breakage of the metallic mold and the like, and additionally can suppress the transpiration of volatile components without being mingled with impurities such as oxygen because the pressure plastically deforms the capsule and encloses the interior to enable molding without touching the air.

In many of the above methods, the solidification is often achieved slightly accompanied by the decomposition of the magnetic material surface, but among shock compression methods, the well-known in-water shock compression method (for example, JP-A-2002-329603 (hereinafter, referred to as "PATENT DOCUMENT 6")) is advantageous for a method capable of molding a magnetic material without being accompanied by decomposition.

The method in which a rare earth-iron-nitrogen based magnetic material and/or a rare earth-iron-nitrogen based magnetic material surface-coated with a ferrite-based magnetic material is added with a metal and molded by one of the methods described above is especially effective as a method for solidifying a magnetic material of the present invention without decomposing it. The metal is preferably a low melting point one, such as Zn, In, Sn or Ga, whose melting point is 1,000°C or lower, and preferably 500°C or lower. Among them, the use of Zn reduces the absorption in a low frequency field, improves the selective absorption ratio at an ultrahigh frequency and remarkably enhances the thermal stability. In the case where the surface coating ratio of a ferrite-based magnetic material to a rare earth-iron-nitrogen based magnetic material is in the range of 50 to 99.9%, the addition of Zn is especially effective. It is possible that the magnetic material is mixed with a ferromagnetic element such as Fe, Co or Ni or a cubic metal element such as Al, V, Cr, Mn, Cu, Zn, Nb, Mo, Ag, Sn, Ta, W, Ir, Pt, Au or Pb, green-compact molded, sintered and rolled.

In the case where a rare earth-iron-nitrogen based magnetic material powder and/or a ferrite-coated rare earth-iron-nitrogen based magnetic material powder obtained by the process (3), the process (3) → the process (4), the process (3) → the process (5), or the process (3) → the process (4) → the process (5) as described above is applied to a magnetic material-resin composite material for a high frequency wave, the magnetic material powder is molded by mixing the magnetic material powder with a thermosetting resin or a thermoplastic resin and then compression molding the mixture, or kneading that together with a thermoplastic resin and then injection molding the mixture, or further by extrusion molding, roll molding, calender molding or the like.

The kind of sheet shape, in the case of applying it, for example, to an electromagnetic noise absorbing sheet, includes batch type sheets by compression molding and a roll-shaped sheet by roll molding, calender molding or the like of 5 to 10,000 $\mu$m in thickness, 5 to 5,000 mm in width and 0.005 to 1,000 m in length.

Orientation methods include mechanical methods and magnetic field orientation. In the case of using a composite magnetic material having a high flatness ratio, utilizing the anisotropy of the shape, mechanical orientation is possible by devising a way of applying pressure and the like. Since a one-dimensional pressure is applied in roll molding and a two-dimensional pressure is applied in compression molding, depending on shapes of magnetic powders, the anisotropy of a magnetic material or a magnetic material-resin composite material after orientation changes corresponding to molding methods.

When molding is performed by the methods described above, if a part or the whole of the processes are performed in a magnetic field, magnetic grains are magnetically oriented and magnetic characteristics are improved in some cases. Methods of magnetic field orientation include three types of uniaxial magnetic field orientation, rotating magnetic field orientation and opposing magnetic poles orientation.

The uniaxial magnetic field orientation refers to that a static magnetic field is applied commonly in an optional direction from the outside to a magnetic material or a magnetic material-resin composite material in a movable state to align the easy magnetization direction of the magnetic material to the external static magnetic field. A uniaxial magnetic field oriented mold is commonly fabricated by thereafter applying a pressure, solidifying the resin component or otherwise.

The rotating magnetic field orientation refers to a method in which a magnetic material or a magnetic material-resin composite material in a movable state is commonly put in an external magnetic field rotating in one plane to align the hard magnetization direction of the magnetic material to one direction. The rotating methods involve a method in which an external magnetic field is rotated, a method in which a magnetic material is rotated in a static magnetic field, a method in which the intensities of a plurality of magnetic poles are synchronously changed to apply a magnetic field at all times by assembling such a sequence as if the magnetic material were subjected to a rotating magnetic field, without rotating the external magnetic field or the magnetic material, and a combination of the these methods. In methods such as extrusion and roll forming, a method in which two or more magnetic poles are arranged in the extrusion direction and the intensities or polarities of the magnetic poles are changed so that a composite magnetic material or a magnetic material-resin composite material is oriented by such a way as if it were subjected to a rotating magnetic field when the material passes is also a rotating magnetic field orientation in a broad sense.

The opposing magnetic poles orientation is a method in which a composite magnetic material or a magnetic material-resin composite material is statically placed, or rotated or translated or moved in combination thereof in an environment where magnetic poles of the same polarity face each other to align the hard magnetization direction to one direction.

If a material for a high frequency wave or a magnetic material-resin composite material for a high frequency wave having an in-plane magnetic anisotropy is uniaxially magnetically oriented, the magnetic permeability is improved by 1 to 50%; in the rotating magnetic field orientation and the opposing magnetic poles orientation, the magnetic permeability is improved by 1 to 200%.

To magnetically orient the magnetic material sufficiently, the in-magnetic field molding is performed in a magnetic field of preferably 8 kA/m or higher, more preferably 80 kA/m or higher, and most preferably 400 kA/m or higher. The magnitude and the time necessary for the magnetic field orientation are decided by the shape of a magnetic material powder, and in the case of a magnetic material-resin composite material, by the viscosity of its matrix and the affinity for its magnetic material powder.

Generally, since the use of a stronger magnetic field gives a shorter orientation time, for the magnetic field orientation in roll molding and calender molding which have a short molding time and use a resin having a high viscosity, the magnetic field of 400 kA/m or higher is desirably used.

EXAMPLES

Hereinafter, the present invention will be described further specifically by way of the following Examples. Evaluation methods in the present invention were as follows.

(1) Complex relative magnetic permeability (and complex relative permittivity), maximum absorption energy coefficient, and selective absorption ratio.

A rare earth-iron-nitrogen based magnetic material or a magnetic material-resin composite material using it was molded into a size of 7 mm in outer diameter, 3.04 mm in inner diameter and approximately 1 mm in thickness (this sample is referred to as a toroidal sample A in Examples), a size of 3.5 mm in outer diameter, 1.52 mm in inner diameter and approximately 1 mm in thickness (this sample is referred to as a toroidal sample B in Examples), and a size of $10 \times 5 \times$ approximately 1 mm (a rectangular parallelepiped sample), and the complex relative magnetic permeability (and complex relative permittivity) thereof was measured using an impedance analyzer (measurement range: 5 MHz to 3 GHz) or a network analyzer (the measurement ranges were as follows: 0.5 to 18 GHz, 0.01 to 3 GHz, 0.1 to 6 GHz or 0.5 to 33 GHz). In the measurement of the toroidal samples A and B, the value of the complex relative magnetic permeability (and complex relative permittivity) was measured by S-parameter method. Furthermore, based on the measurement results of variations of the complex relative magnetic permeability imaginary term with the frequency in each measurement range, the maximum absorption energy coefficient and the selective absorption ratio at 1 GHz or higher were determined.

(2) Magnetization, magnetic anisotropy ratio and anisotropy magnetic field

A rare earth-iron-nitrogen based magnetic material was mixed with copper powder, and molded in an external magnetic field of 1.2 MA/m at 0.2 GPa; and magnetic curves of the mold in the magnetic field orientation direction and in the direction perpendicular thereto were drawn in the external magnetic field range of 0 to 1.2 MA using a vibration sample type magnetometer (VSM) to obtain the value of magnetizations (emu/g) and magnetic anisotropy ratios p/q at room temperature. Further, from the obtained magnetic curves, the anisotropy magnetic fields $H_{a1}$ and $H_{a2}$ (A/m) were roughly estimated by extrapolation.

(3) Electric resistivity

A rare earth-iron-nitrogen based magnetic material was molded by the in-water shock compression method (S method) or the green-compact molding method (P method) using a pressure of 1 GPa disclosed in PATENT DOCUMENT 6, and a ferrite-coated rare earth-iron-nitrogen based magnetic material was molded by the green-compact molding method (P method) using a pressure of 1 GPa; and the magnetic materials were measured by the four-terminal method. The S method made the volume fraction of the magnetic material in the range of 92 to 95%, and provided an electric resistivity near the intrinsic one of the magnetic material. The P method made the volume fraction of the magnetic material of approximately 70%, and gave an electric resistivity higher than the intrinsic one, but could teach the degree of the electric insulation in comparison of the presence/absence of a coating of a ferrite-based magnetic material.

(4) Nitrogen amount, oxygen amount and hydrogen amount

The nitrogen amount and the oxygen amount were quantified with $Si_3N_4$ (including the quantification of $SiO_2$) as a standard sample by the inert gas fusion in impulse furnace. The hydrogen amount was quantified with a hydrogen gas of 99.9999% in purity as a standard sample by the inert gas fusion in impulse furnace.

(5) Average grain diameter

A volume-corresponding diameter distribution was measured using a laser diffraction type grain size distribution analyzer and the average grain diameter was evaluated as a median diameter ($\mu$m) determined from a distribution curve thereof.

(6) Coating thickness of a ferrite-based magnetic material

The cross-section of a ferrite-coated rare earth-iron-nitrogen based magnetic material powder or its molding was observed by a scanning electron microscope (SEM) or a transmission electron microscope (TEM) to determine each magnetic material component and the void amount together using results of the density measurement. The approximate coating thickness was confirmed as a value half a difference between average grain diameters determined before and after ferrite coating.

[Example 1]

Nd of 99.9% in purity and Fe of 99.9% in purity were melted and mixed in an arc melting furnace in an argon gas atmosphere and then, an ingot of 5 mm in thickness was fabricated by the drop cast method. The ingot was annealed in an argon atmosphere at 1,030°C for 20 hours, slowly cooled, and subjected to a surface polishing to prepare a raw material alloy having a composition of $Nd_{11.6}Fe_{88.4}$.

The raw material alloy was pulverized by a jaw crusher, and then further pulverized by a cutter mill in an argon atmosphere, and the grain size was regulated by a sieve to obtain a powder of approximately 60 $\mu$m in average grain diameter. The Nd-Fe raw material alloy powder was charged in a horizontal tubular furnace, and subjected to a heat treatment at 420°C in a mixed gas flow having an ammonia partial pressure of 0.35 atm and a hydrogen gas partial pressure of 0.65 atm for 1 hour to adjust the alloy powder into an $Nd_{10.1}Fe_{76.7}N_{13.2}$ composition of approximately 30 $\mu$m in average grain diameter. This rare earth-iron-nitrogen based magnetic material had a value of magnetization of 147 emu/g and a magnetic anisotropy ratio of 0.88.

Then, the rare earth-iron-nitrogen based magnetic material obtained as described above was pulverized in hexane in a planetary ball mill for 30 min to fabricate an Nd-Fe-N based magnetic material of approximately 2 $\mu$m in average grain diameter. The magnetic material was blended with 12% by mass of an epoxy resin, press molded at 1 GPa, and cured at 150°C for 2 hours to fabricate a toroidal sample A. The sample A had a density of 4.2 and a volume fraction of the magnetic material of 47% by volume.

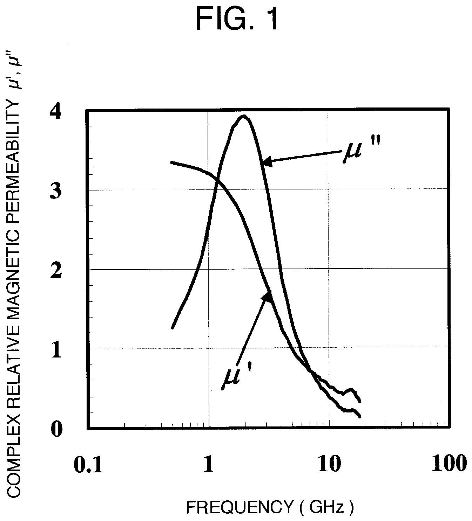

This rare earth-iron-nitrogen based magnetic material-resin composite material had a frequency dependency of the complex relative magnetic permeability at 0.5 to 18 GHz shown in Fig. 1. The maximum value of the imaginary term of the complex relative magnetic permeability was $\mu''_{max}$=3.9 at a frequency of 1.9 GHz. The maximum value of the real term of the complex relative magnetic permeability was $\mu'_{max}$=3.3 at a frequency of 0.5 GHz. The maximum absorption energy coefficient was $f\mu''_{max}$=9.3 GHz at a frequency of 3.0 GHz. The selective absorption ratio at 1 GHz or higher was 1.6. These magnetic characteristics are shown in Table 1.

The electric resistivity (S method) of the rare earth-iron-nitrogen based magnetic material was 500 $\mu\Omega$cm. As a result of the analysis of the magnetic material by X-ray diffractometry, a diffraction line indicating mainly the rhombohedral system was observed.

The rare earth-iron-nitrogen based magnetic material-resin composite material had a frequency dependency of the complex relative permittivity at 0.5 to 18 GHz shown in Fig. 2. The maximum value of the imaginary term $\varepsilon''$ of the complex relative permittivity was 98 at a frequency of 6.7 GHz, and the real term $\varepsilon'$ of the complex relative permittivity in the frequency range of 0.5 to 6 GHz exceeded 100, and the maximum value thereof was 132. The magnetic material is a magnetic material for a high frequency wave exhibiting an effect also on the absorption of electromagnetic noises and electromagnetic waves from far fields.

[Comparative Example 1]

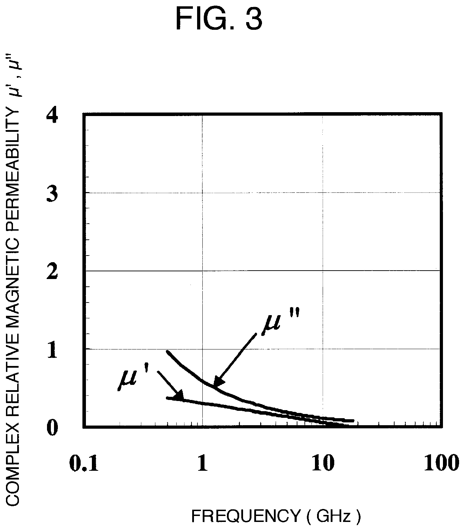

A rare earth-iron based alloy was fabricated as in Example 1, except for subjecting to a heat treatment in an ammonia-hydrogen mixed gas and not introducing nitrogen. The measurement of magnetic characteristics of the obtained alloy gave a magnetization value of 80 emu/g and a magnetic anisotropy ratio of 0.98. A magnetic material-resin composite material obtained as in Example 1 by using this rare earth-iron based alloy had a frequency dependency of the complex relative magnetic permeability in the range of 0.5 to 18 GHz shown in Fig. 3.

The maximum value of the imaginary term of the complex relative magnetic permeability was $\mu''_{max}$=1.0 at a frequency of 0.5 GHz. The maximum value of the real term of the complex relative magnetic permeability was $\mu'_{max}$=0.4 at a frequency of 0.5 GHz. The maximum absorption energy coefficient was $f\mu''_{max}$=1.4 GHz at a frequency of 10 GHz. The selective absorption ratio at 1 GHz or higher was 0.7. These magnetic characteristics are shown in Table 1. The rare earth-iron magnetic material in the magnetic material-resin composite material had a volume fraction of 47%.

[Comparative Example 2]

An Nd-Fe-B based magnetic material-resin composite material was fabricated as in Example 1 by using an Nd-Fe-B based magnetic material of an $Nd_{11.8}Fe_{77.6}Co_{5.5}B_{5.1}$ composition.

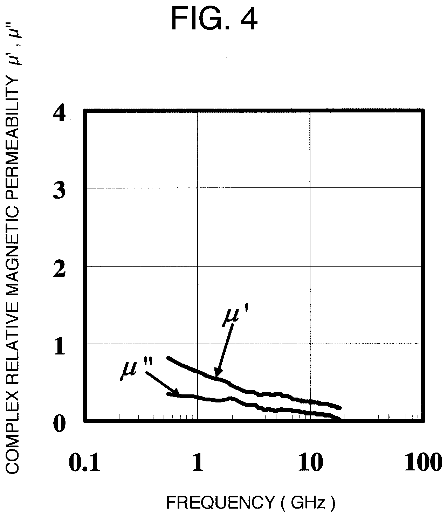

The Nd-Fe-B based magnetic material-resin composite material had a frequency dependency of the complex relative magnetic permeability in the range of 0.5 to 18 GHz shown in Fig. 4. The maximum value of the imaginary term of the complex relative magnetic permeability was $\mu''_{max}$=0.3 at a frequency of 0.5 GHz. The maximum value of the real term of the complex relative magnetic permeability was $\mu'_{max}$=0.8 at a frequency of 0.5 GHz. The maximum absorption energy coefficient was $f\mu''_{max}$=1.1 GHz at a frequency of 11.8 GHz. The selective absorption ratio at 1 GHz or higher was 0.9. These magnetic characteristics are shown in Table 1.

The electric resistivity (S method) of the magnetic material was 100 $\mu\Omega$cm. This value was as small as one fifth that of the rare earth-iron-nitrogen based magnetic material.

As is clear by comparison of Example 1 and Comparative Example 2, since the rare earth-iron-nitrogen based magnetic material being a nitride had a lower electric resistivity than that of the Nd-Fe-B based magnetic material being a metal-based magnetic material, the rare earth-iron-nitrogen based magnetic material is suitable for a magnetic material for a high frequency wave.

The Nd-Fe-B based magnetic material in the magnetic material-resin composite material had a volume fraction of 47% by volume.

[Example 2] (not according to the invention)

The course powder of the $Nd_{10.1}Fe_{76.7}N_{13.2}$ composition obtained in Example 1 was subjected to a rotation ball mill in argon having an oxygen partial pressure of 1%, surface-treated in a ferric chloride solution of pH 6.2, and thereafter subjected to a surface oxidation treatment under pH regulation to obtain a rare earth-iron-nitrogen (-hydrogen-oxygen) based magnetic material of $Nd_{8.0}Fe_{60.8}N_{10.6}H_{7.8}O_{12.8}$ having an average grain diameter of 6 $\mu$m.

This material was blended with 12% by mass of an epoxy resin, molded in a static magnetic field of 1.2 MA/m (uniaxial magnetic field orientation) at a molding pressure of 1 GPa into a size of $10\times5\times1.3$ mm, and cured at 150°C for 2 hours. The obtained molding had a density of 5.2 and a volume fraction of the magnetic material of 62% by volume.

The maximum value of the imaginary term of the complex relative magnetic permeability in the case where the magnetic field orientation direction of the rare earth-iron-nitrogen based magnetic material-resin composite material and the direction of the applied changing high frequency magnetic field were aligned was $\mu''_{max}$=3.8 at a frequency of 3.0 GHz. When the frequency was 10 MHz, the real term of the complex relative magnetic permeability exhibited the maximum, whose value was $\mu'_{max}$=8.4. The maximum absorption energy coefficient was $f\mu''_{max}$=11 GHz at a frequency of 3.0 GHz. The selective absorption ratio at 1 GHz or higher was 1.3. These magnetic characteristics are shown in Table 1. The measurement frequency range was 10 MHz to 3 GHz.

The electric resistivity (S method) of the rare earth-iron-nitrogen based material was 500 $\mu\Omega$cm. As a result of the analysis of the rare earth-iron-nitrogen based material by X-ray diffractometry, a diffraction line indicating mainly the rhombohedral system was observed.

[Example 3 and 4]

Nd of 99.9% in purity and Fe of 99.9% in purity were melted and mixed in a high frequency melting furnace in an argon gas atmosphere and then, annealed in an argon atmosphere at 950°C for 100 hours, slowly cooled, and subjected to a surface polishing to prepare a raw material alloy having a composition of $Nd_{10.5}Fe_{89.5}$.

The raw material alloy was pulverized by a jaw crusher, then pulverized by a pin mill in an argon atmosphere, and thereafter, the grain size was regulated by an acoustic classifier to obtain a powder of 50 $\mu$m in average grain diameter.

This Nd-Fe raw material alloy powder was charged in a horizontal tubular furnace, subjected to a heat treatment at 420°C in a mixed gas flow having an ammonia partial pressure of 0.35 atm and a hydrogen gas partial pressure of 0.65 atm for 2 hours, and then annealed at 400°C in argon gas for 30 min to adjust the powder alloy into an $Nd_{9.1}Fe_{77.3}N_{13.6}$ composition of approximately 25 $\mu$m in average grain diameter.

This rare earth-iron-nitrogen based magnetic material had a value of magnetization of 159 emu/g, and the anisotropy magnetic fields $H_{a1}$ and $H_{a2}$ were estimated to be respectively 30 kA/m and 3 MA/m from the magnetic curves. The value of the natural resonance frequency $f_r$ was approximately 10 GHz. The magnetic anisotropy ratio was 0.84.

Then, the obtained rare earth-iron-nitrogen based magnetic material was pulverized by a rotary ball mill to fabricate an Nd-Fe-N based magnetic material of approximately 4 $\mu$m in average grain diameter. The magnetic material was blended with 10% by mass of an epoxy resin, and the sample was divided into two of a sample a and a sample b. Each of the samples was charged in a nonmagnetic superhard mold; the sample a was press molded at 1 GPa as it was (Example 3), and the sample b was subjected to a rotating magnetic field orientation by rotating the sample b together with the superhard mold in a magnetic field of 1.2 MA at a rotation speed of 60 rpm for 2 min, and thereafter press molded at 1 GPa (Example 4). These two samples were cured at 150°C for 2 hours, and worked to fabricate toroidal samples A. The obtained samples had a density of 3.8 and a volume fraction of the magnetic material of 40% by volume.

The frequency dependencies of the complex relative magnetic permeability in the range of 0.1 to 6 GHz of the rare earth-iron-nitrogen based magnetic material-resin composite materials were measured.

For the sample a (Example 3), the maximum value of the imaginary term of the complex relative magnetic permeability was $\mu''_{max}$=1.8 at a frequency of 5.7 GHz. The maximum value of the real term of the complex relative magnetic permeability was $\mu'_{max}$=2.4 at a frequency of 0.5 GHz. The maximum absorption energy coefficient was $f\mu''_{max}$=12 GHz at a frequency of 6.0 GHz. The selective absorption ratio at 1 GHz or higher was 36. These magnetic characteristics are shown in Table 1. The electric resistivity (S method) of the rare earth-iron-nitrogen based magnetic material was 400 $\mu\Omega$cm.

For the sample b (Example 4), the maximum value of the imaginary term of the complex relative magnetic permeability was $\mu''_{max}$=2.2 at a frequency of 4.7 GHz. The maximum value of the real term of the complex relative magnetic permeability was $\mu'_{max}$=3.0 at a frequency of 0.5 GHz. The maximum absorption energy coefficient was $f\mu''_{max}$=12 GHz at a frequency of 5.7 GHz. The selective absorption ratio at 1 GHz or higher was 32. These magnetic characteristics are shown in Table 1.

Subjecting to the rotating magnetic field orientation improved the real term of the complex relative magnetic permeability by approximately 25%, and also the maximum value of the imaginary term of the complex relative magnetic permeability by approximately 22%.

The toroidal samples A were analyzed by X-ray diffractometry with the doughnut-like bottom surface of the each toroidal sample A taken as a measurement surface, and both were observed to exhibit a diffraction line indicating mainly the rhombohedral system; but in the sample b, the diffraction line of (006) was observed to be much higher than that of (303) being the most intensive line for the powder pattern to reveal that the magnetic material was magnetically oriented in the form of the c axis orienting in the direction perpendicular to the diameter of the toroidal sample A. The intensity ratio of (006)/(303) was 0.6 for the sample a, and by contrast, that was 3.4 for the sample b. Therefore, it is concluded that the rare earth-iron-nitrogen based magnetic material was an in-plane magnetic anisotropic material.

Also the rare earth-iron-nitrogen based magnetic material fabricated in Example 1 was analyzed using X-ray diffractometry similarly to the above in which a sample subjected to a rotating magnetic field orientation and a sample of no orientation were compared, and was found to be an in-plane magnetic anisotropic material.

[Example 5 and Comparative Example 3]

50% by volume of a rare earth-iron-nitrogen based magnetic material fabricated by the same method as in Example 1 and 50% by volume of an Fe powder of 99.55% in purity and 2.5 $\mu$m in particle diameter were mixed in hexane in an agate mortar, and press molded at 1.5 GPa to fabricate a toroidal sample A (Example 5). For comparison, a toroidal sample A (Comparative Example 3) only of an Fe powder of 2.5 $\mu$m in particle diameter was fabricated.

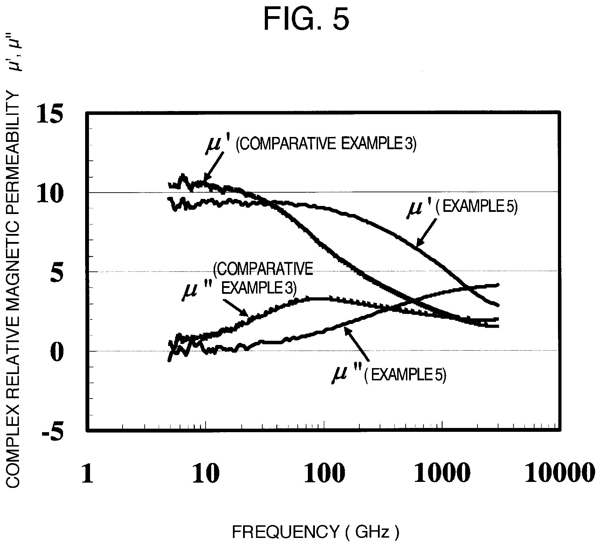

Measurement results of the frequency dependencies of the complex relative magnetic permeability at 5 MHz to 3 GHz of the rare earth-iron-nitrogen based magnetic materials of Example 5 and Comparative Example 3 are shown in Fig. 5.

The maximum value of the imaginary term of the complex relative magnetic permeability of Example 5 was $\mu''_{max}$=4.2 at a frequency of 3.0 GHz. The maximum value of the real term of the complex relative magnetic permeability was $\mu'_{max}$=9.5 at a frequency of 5 MHz. The maximum absorption energy coefficient was $f\mu''_{max}$=13 GHz at a frequency of 3 GHz. The selective absorption ratio at 1 GHz or higher was 1.2. These magnetic characteristics are shown in Table 1.

The maximum value of the imaginary term of the complex relative magnetic permeability of Comparative Example 3 was $\mu''_{max}$=3.3 at a frequency of 80 MHz. The maximum value of the real term of the complex relative magnetic permeability was $\mu'_{max}$=11 at a frequency of 5 MHz. The maximum absorption energy coefficient was $f\mu''_{max}$=6.0 at a frequency of 3 GHz. The selective absorption ratio at 1 GHz or higher was 0.7. These magnetic characteristics are shown in Table 1.

The magnetic material compacted and solidified from an Fe powder alone exhibited a high relative magnetic permeability in a low frequency field, but had a low selective absorption ratio at 1 GHz or higher, resulting in being hardly used in ultrahigh frequency field applications.

As described before in the detailed explanation of the maximum absorption energy coefficient, in the magnetic material for a high frequency wave of the present invention, the maximum absorption energy coefficient exceeding 6 GHz was aimed at, and the magnetic material of Example 5 exceeded by twice or more than twice the 6 GHz.

[Example 6]

An $Nd_{12.5}Fe_{87.5}$ raw material alloy was obtained as in Example 1. The raw material alloy was superquenched by a copper roll method under the conditions of a roll diameter of 194 mm and a roll rotation frequency of 5,000 rpm in an argon atmosphere to fabricate a superquenched ribbon of 5 $\mu$m in thickness. As a result of the analysis by X-ray diffractometry of the superquenched ribbon, a diffraction line indicating mainly a hexagonal rare earth-iron alloy was observed, and a diffraction line indicating a rhombohedral rare earth-iron alloy and a diffraction line of $\alpha$-Fe were observed to be mixed therewith.

This material was heated at 395°C in an ammonia-hydrogen mixed gas for 30 min to fabricate a rare earth-iron-nitrogen based magnetic material of an $Nd_{11.1}Fe_{77.7}Nd_{11.2}$ composition.

A toroidal sample A of the rare earth-iron-nitrogen based magnetic material was fabricated as in Example 1, except for using 4% by mass of the epoxy resin, and measured for the frequency dependency of the complex relative magnetic permeability at 5 MHz to 3 GHz. The maximum value of the imaginary term of the complex relative magnetic permeability was $\mu''_{max}$=4.5 at a frequency of 1.3 GHz. The maximum value of the real term of the complex relative magnetic permeability was $\mu'_{max}$=6.9 at a frequency of 5 MHz. The maximum absorption energy coefficient was $f\mu''_{max}$=6.5 GHz at a frequency of 3.0 GHz. The selective absorption ratio at 1 GHz or higher was 1.2. These magnetic characteristics are shown in Table 1. The rare earth-iron-nitrogen based magnetic material-resin composite material had a density of 4.9 and a volume fraction of 58% by volume. The electric resistivity (S method) of the rare earth-iron-nitrogen based magnetic material was approximately 1, 000 $\mu\Omega$cm.

As a result of the analysis by X-ray diffractometry of the material, diffraction lines of the hexagonal and rhombohedral systems and $\alpha$-Fe were observed. The average flatness ratio $\psi$ of the rare earth-iron-nitrogen based magnetic material was determined by observation by SEM of the cross-section of the toroidal sample A, and had a value thereof of 0.2. The rare earth-iron-nitrogen based magnetic material of the present example was a flat powder having an average flatness ratio of 0.2.

[Examples 7 to 9]

Toroidal samples A were fabricated by the same method as in Example 1, except for using compositions of rare earth-iron-nitrogen based magnetic materials in Table 1 and 6% by mass of a formulation amount of the epoxy resin, and measured for magnetic characteristics by the same method as in Example 1. The grain diameter of these magnetic materials was approximately 1 $\mu$m. The volume fractions and the magnetic characteristics of these magnetic materials are shown in Table 1.

As a result of the analysis by X-ray diffractometry, the crystal structures of the magnetic materials of Examples 7 and 8 (both are not according to the invention) were identified to be the rhombohedral system and that of Example 9 was identified to be the hexagonal system. The magnetic material of Example 8 (not according to the invention) was observed to exhibit the mixing of a diffraction line of $\alpha$-Fe. The same analysis as in Examples 3 and 4 revealed that all the rare earth-iron-nitrogen based magnetic materials had an in-plane magnetic anisotropy. The electric resistivity (S method) of the rare earth-iron-nitrogen based magnetic materials was approximately in the range of 400 to 1,000 $\mu\Omega$cm.

[Example 10]

The Nd-Fe-N based magnetic material having an average grain diameter of approximately 4 $\mu$m obtained in Example 3 was subjected to a surface treatment with 2 % by mass of a titanium coupling agent, and thereafter added with 9.8% by mass of 12-nylon, and kneaded by a batch type kneader at 260°C; and the obtained pellet was injection molded at an injection temperature of 285°C and a metal mold temperature of 90°C and at an injection pressure of 0.1 GPa to obtain a disk-like rare earth-iron-nitrogen based magnetic material-resin composite material of 10 mm in diameter.

The magnetic material-resin composite material was worked to make a toroidal sample A having a density of 4.6 and a volume fraction of the magnetic material of 54%; and the toroidal sample A was measured for magnetic characteristics. As a result of the measurement of the frequency dependency of the complex relative magnetic permeability at 0.5 to 18 GHz, the maximum value of the imaginary term of the complex relative magnetic permeability was $\mu''_{max}$=2.0 at a frequency of 6.5 GHz. The maximum value of the real term of the complex relative magnetic permeability was $\mu'_{max}$=3.1 at a frequency of 0.5 GHz. The maximum absorption energy coefficient was $f\mu''_{max}$=16 GHz at a frequency of 10.2 GHz. The selective absorption ratio at 1 GHz or higher was 72. These magnetic characteristics are shown in Table 1. As a result of the analysis by X-ray diffractometry of the magnetic material-resin composite material, a diffraction line indicating mainly the rhombohedral system was observed.

[Example 11]

Nd of 99.9% in purity and Fe of 99.9% in purity were melted and mixed in an arc melting furnace in an argon gas atmosphere and then, an ingot of 5 mm in thickness was fabricated by the drop cast method. The ingot was annealed in an argon atmosphere at 1,030°C for 20 hours, slowly cooled, and subjected to a surface polishing to prepare a raw material alloy having a composition of $Nd_{11.6}Fe_{88.4}$.

The raw material alloy was pulverized by a jaw crusher, and then further pulverized by a cutter mill in an argon atmosphere, and the grain size was regulated by a sieve to obtain a powder of approximately 60 $\mu$m in average grain diameter. The Nd-Fe raw material alloy powder was charged in a horizontal tubular furnace, and subjected to a heat treatment at 420°C in a mixed gas flow having an ammonia partial pressure of 0.35 atm and a hydrogen gas partial pressure of 0.65 atm for 1 hour to adjust the alloy powder into an $Nd_{10.1}Fe_{76.7}N_{13.2}$ composition of approximately 30 $\mu$m in average grain diameter. This rare earth-iron-nitrogen based magnetic material had a value of magnetization of 147 emu/g and a magnetic anisotropy ratio of 0.88.

Then, the rare earth-iron-nitrogen based magnetic material obtained as described above was pulverized in hexane in a planetary ball mill for 30 min to fabricate an Nd-Fe-N based magnetic material of approximately 2 $\mu$m in average grain diameter. The magnetic material was charged together with purified water in a reactor, and surface-treated with an acid; thereafter, while the magnetic material was again vigorously stirred in the air to such a degree that the magnetic material was fully dispersed in purified water, a 280 mM potassium hydroxide aqueous solution (pH adjusting solution) was dropwise charged to gradually shift and adjust pH of the system from an acidic side to an alkali side in the range of 6.1 to 12.2, and a 126 mM $FeCl_2$ aqueous solution (reaction solution) was simultaneously dropwise charged and reacted for 10 min; then the dropping of the pH adjusting solution and the reaction solution was stopped, and the stirring operation was continued further for 10 min. Thereafter, the dispersion was washed with purified water and then with acetone to remove components liberated from the rare earth-iron-nitrogen based magnetic material. The ferrite coating treatment by this ferrite plating method provided a magnetic material for a high frequency wave being a rare earth-iron-nitrogen based magnetic material having a ferrite coating layer of $Nd_{8.6}Fe_{71.2}N_{11.2}O_{9.0}$ of approximately 2.1 $\mu$m in average grain diameter. The ferrite coating layer has a thickness of approximately 50 nm. The electron beam diffractometry and the EPDM measurement of the ferrite coating layer revealed that the ferrite coating layer was an intermediate phase of magnetite and maghemite having a spinel structure. As a result of X-ray diffractometry, a diffraction line indicating mainly the rhombohedral system was observed.

The ferrite-coated rare earth-iron-nitrogen based magnetic material was blended with 12% by mass of an epoxy resin, press molded at 1 GPa, and cured at 150°C for 2 hours to fabricate a toroidal sample A. The obtained toroidal sample A had a density of 4.0 g/cm$^3$ and a volume fraction of 47% by volume.

The frequency dependency of the complex relative magnetic permeability at 0.5 to 18 GHz of the magnetic material-resin composite material was measured. Magnetic characteristics measurement results of respective items of the maximum value of the imaginary term of the complex relative magnetic permeability and the frequency at this time and the maximum value of the real term thereof and the frequency at this time, and the maximum absorption energy coefficient are shown in Table 2. The electric resistivity (P method) of the ferrite-coated rare earth-iron-nitrogen based magnetic material exhibited approximately 8,000 $\mu\Omega$cm, which was a high value 4.7 times 1,700 $\mu\Omega$cm of the electric resistivity (P method) of the unplated rare earth-iron-nitrogen based magnetic material.

Example 1 was carried out as in the present example, except for using the ferrite-non-coated rare earth-iron-nitrogen based magnetic material. Comparing the magnetic characteristics, the maximum value $\mu''_{max}$ of the imaginary term of the complex relative magnetic permeability was improved by approximately 10%, and the frequency $f_a$ at this time, approximately 50%; the maximum value $\mu'_{max}$ of the real term of the complex relative magnetic permeability was improved by approximately 30%; and the maximum absorption energy coefficient $f\mu''_{max}$ was improved by approximately 70%.

[Examples 12 and 13]

Nd of 99.9% in purity and Fe of 99.9% in purity were melted and mixed in a high frequency melting furnace in an argon gas atmosphere and then, annealed in an argon atmosphere at 950°C for 100 hours, slowly cooled, and subjected to a surface polishing to prepare a raw material alloy having a composition of $Nd_{10.5}Fe_{89.5}$.

The raw material alloy was pulverized by a jaw crusher, then further pulverized by a pin mill in an argon atmosphere, and thereafter, the grain size was regulated by an acoustic classifier to obtain a powder of 50 $\mu$m in average grain diameter.

This Nd-Fe raw material alloy powder was charged in a horizontal tubular furnace, subjected to a heat treatment at 420°C in a mixed gas flow having an ammonia partial pressure of 0.35 atm and a hydrogen gas partial pressure of 0.65 atm for 2 hours, and then annealed at 400°C in argon gas for 30 min to adjust the powder alloy into an $Nd_{9.1}Fe_{77.3}N_{13.6}$ composition of approximately 25 $\mu$m in average grain diameter.

This rare earth-iron-nitrogen based magnetic material had a value of magnetization of 159 emu/g, and the anisotropy magnetic fields $H_{a1}$ and $H_{a2}$ were estimated to be respectively 30 kA/m and 3 MA/m from the magnetic curves. The value of the natural resonance frequency $f_r$ was approximately 10 GHz. The magnetic anisotropy ratio was 0.84.

Then, the obtained rare earth-iron-nitrogen based magnetic material was pulverized by a rotary ball mill to fabricate an Nd-Fe-N based magnetic material of approximately 4 $\mu$m in average grain diameter, and then the rare earth-iron-nitrogen based magnetic material powder was subjected to the same ferrite coating treatment as in Example 11, except for using the altered condition in which while pH of the system was adjusted so as to be gradually shifted from an acidic side to an alkali side in the range of 4.2 to 13.7, the reaction time took 20 min, to obtain a ferrite-coated rare earth-iron-nitrogen based magnetic material of an $Nd_{8.0}Fe_{73.1}N_{11.9}O_{7.0}$ composition (not according to the invention). The electron beam diffractometry and the EPMA measurement of the ferrite coating layer of the ferrite-coated rare earth-iron-nitrogen based magnetic material revealed that the ferrite coating layer was an intermediate phase of magnetite and maghemite having a spinel structure. The ferrite coating layer had a thickness of 100 nm.

The ferrite-coated rare earth-iron-nitrogen based magnetic material thus obtained was blended with 10% by mass of an epoxy resin, and thereafter, the sample was divided into two of a sample $\alpha$ and a sample $\beta$. Each of the samples was charged in a superhard mold; the sample $\alpha$ was press molded at 1 GPa as it was (Example 12), and the sample $\beta$ was subjected to a rotating magnetic field orientation by rotating the sample $\beta$ together with the superhard mold in a magnetic field of 1.2 MA at a rotation speed of 60 rpm for 2 min, and thereafter press molded at 1 GPa (Example 13). These two samples were cured at 150°C for 2 hours, and worked to fabricate toroidal samples A. The obtained samples had a density of 3.6 g/cm$^3$ and a volume fraction of the ferrite-coated rare earth-iron-nitrogen based magnetic material of 40% by volume.

The frequency dependencies of the complex relative magnetic permeabilities at 0.1 to 6 GHz of these magnetic material-resin composite material were measured. Measurement results of the respective magnetic characteristics are shown in Table 2.

Performing the rotating magnetic field orientation improved the real term of the complex relative magnetic permeability by approximately 10%.

The electric resistivity (P method) of the ferrite-coated rare earth-iron-nitrogen based magnetic material exhibited approximately 10,000 $\mu\Omega$cm, which was a high value approximately 5.3 times 1,900 $\mu\Omega$cm of the electric resistivity (P method) of the non-plated rare earth-iron-nitrogen based magnetic material. The toroidal samples A were analyzed by X-ray diffractometry with the doughnut-like bottom surface of the each toroidal sample A taken as a measurement surface, and both were observed to exhibit a diffraction line indicating mainly the rhombohedral system; but in the sample $\beta$, the diffraction line of (006) was observed to be much higher than that of (303) being the most intensive line for the powder pattern to reveal that the magnetic material was magnetically oriented in the form of the c axis orienting in the direction perpendicular to the diameter of the toroidal sample A. The intensity ratio of (006)/(303) was 0.5 for the sample $\alpha$, and by contrast, that was 4 for the sample $\beta$. Therefore, it was concluded that the rare earth-iron-nitrogen based magnetic material is an in-plane magnetic anisotropic material.

Also the rare earth-iron-nitrogen based magnetic material fabricated in Example 11 was analyzed using X-ray diffractometry similarly to the above in which a sample subjected to a rotating magnetic field orientation and a sample of no orientation were compared, and was found to be an in-plane magnetic anisotropic material.

Comparing Examples 2 and 3, and Examples 12 and 13, it was found that coating a rare earth-iron-nitrogen based magnetic material with a ferrite-based magnetic material improves the magnetic permeability and raises the absorption frequency and the absorption energy coefficient to higher frequency sides.

[Example 14]

A toroidal sample A of a ferrite-coated rare earth-iron-nitrogen based magnetic material was fabricated by the same method as in Example 11, except for using phase compositions of a rare earth-iron-nitrogen based magnetic material powder of approximately 1 $\mu$m in average grain diameter and a ferrite coating layer having a spinel structure shown in Table 2 and using 6% by mass of the formulation amount of the epoxy resin, and measured for magnetic characteristics by the same method as in Example 11. The thickness and the values of the magnetic characteristics of the ferrite coating layer of the magnetic material-resin composite material are shown in Table 2. The magnetic material-resin composite material had a density of 5.1 g/cm$^3$ and a volume fraction of the rare earth-iron-nitrogen based magnetic material of approximately 65% by volume.

As a result of the analysis by X-ray diffractometry, the crystal structure of the rare earth-iron-nitrogen based magnetic material of the present example was identified to be hexagonal. The same analysis as in Examples 12 and 13 revealed that the rare earth-iron-nitrogen based magnetic material of the present example had an in-plane magnetic anisotropy. The ferrite coating layer was identified by electron beam diffractometry, and EPMA and EDX measurements. The electric resistivity (P method) of the ferrite-coated rare earth-iron-nitrogen based magnetic material exhibited 9,000 $\mu\Omega$cm, which was a high value approximately 5 times the electric resistivity (P method) of the non-plated rare earth-iron-nitrogen based magnetic material.

[Example 15]

A toroidal sample A of a ferrite-coated rare earth-iron-nitrogen based magnetic material was fabricated by the same method as in Example 11, except for using phase compositions of a rare earth-iron-nitrogen based magnetic material powder of approximately 3 $\mu$m in average grain diameter and a ferrite coating layer having a spinel structure shown in Table 2 and using 10% by mass of the formulation amount of the epoxy resin, and measured for magnetic characteristics by the same method as in Example 11. The thickness and the values of the magnetic characteristics of the ferrite coating layer of the magnetic material-resin composite material are shown in Table 2. In this magnetic material-resin composite material, the imaginary term $\mu$" of the complex relative magnetic permeability did not reach a maximum value even at 18 GHz, and was still increasing with the frequency. Therefore, the maximum value of $\mu$" and the value of f$\mu$"$_{max}$ were values at 18 GHz. The obtained composite material had a density of 4.4 g/cm$^3$ and a volume fraction of the ferrite-coated rare earth-iron-nitrogen based magnetic material of 53% by volume.

As a result of the analysis by X-ray diffractometry, the crystal structure of the rare earth-iron-nitrogen based magnetic material in this ferrite-coated rare earth-iron-nitrogen based magnetic material was observed to be mainly rhombohedral, but to be mixed with a diffraction line of $\alpha$-Fe. The electric resistivity (P method) of the ferrite-coated rare earth-iron-nitrogen based magnetic material exhibited approximately 10,000 $\mu\Omega$cm, which was a high value approximately 5 times the electric resistivity (P method) of the non-plated rare earth-iron-nitrogen based magnetic material. The same analysis as in Examples 3 and 4 revealed that the rare earth-iron-nitrogen based magnetic material of the present Example was an in-plane magnetic anisotropic material.

[Example 16]

A rare earth-iron-nitrogen based magnetic material of an Nd$_{9.1}$Fe$_{77.3}$N$_{13.6}$ composition of 25 $\mu$m in average grain diameter was obtained as in Examples 12 and 13.

The obtained magnetic material was pulverized to an average grain diameter of approximately 2.2 $\mu$m, and a magnetic material of an Nd$_{8.0}$Fe$_{70.7}$Zn$_{2.6}$N$_{11.9}$O$_{6.8}$ composition was obtained using the pulverized magnetic material by the same method as in Example 11, except for using a 113.2 mM FeCl$_2$ aqueous solution and a 12.6 mM ZnCl$_2$ aqueous solution as reaction solutions and using the altered condition in which while pH of the aqueous solution was adjusted so as to be gradually shifted from an acidic side to an alkali side in the range of 4.6 to 11.1, the reaction time took 20 min. As a result of the analysis by electron beam diffractometry and the EDX measurement, the ferrite coating layer was found to be an Zn ferrite phase having a spinel structure. Further, as a result of the analysis by X-ray diffractometry, the crystal structure of the rare earth-iron-nitrogen based magnetic material in this magnetic material was mainly rhombohedral. The electric resistivity (P method) of the ferrite-coated rare earth-iron-nitrogen based magnetic material exhibited approximately 18,000 $\mu\Omega$cm, which was a high value approximately 9 times the electric resistivity (P method) of the non-plated rare earth-iron-nitrogen based magnetic material.

The ferrite-coated rare earth-iron-nitrogen based magnetic material was added with 8% by mass of an epoxy resin; and a toroidal sample A similar to that in Example 11 was obtained. The magnetic material-resin composite material had a density of 4.8 g/cm$^3$, and a volume fraction of the magnetic material of approximately 60% by volume. The values of the respective magnetic characteristics and the thickness of the ferrite coating layer of the magnetic material-resin composite material measured by the same method as in Example 11 are shown in Table 2.

[Example 17]

The ferrite-coated rare earth-iron-nitrogen based magnetic materials obtained in Examples 12 and 13 were each surface-treated with 2% by mass of a titanium coupling agent, added with 9.8% by mass of 12-nylon, and kneaded by a batch kneader at 260°C; the obtained pellet was injection molded at an injection temperature of 285°C and a metal mold temperature of 90°C and at an injection pressure of 0.1 GPa to obtain a disk-like rare earth-iron-nitrogen based magnetic material-resin composite material of 10 mm in diameter.

The magnetic material-resin composite material was worked to make a toroidal sample A having a density of 4.0 and a volume fraction of the magnetic material of 56%; and the magnetic characteristics were measured by the same method as in Example 11. The results are shown in Table 2. As a result of the analysis by X-ray diffractometry, a diffraction line indicating mainly the rhombohedral system was observed.

In Examples 11 to 17 described above, the selective absorption ratios exhibited values of 1.4 or higher.

[Example 18] (not according to the invention)

Nd of 99.9% in purity, Fe of 99.9% in purity, Co of 99.9% in purity and Mn of 99.9% in purity were melted and mixed in an arc melting furnace in an argon gas atmosphere to fabricate an ingot. The ingot was annealed further in an argon atmosphere at 1,030°C for 20 hours, slowly cooled, and subjected to a surface polishing to prepare a raw material alloy having a composition of $Nd_{10.5}(Fe_{0.85}Co_{0.1}Mn_{0.05})_{89.5}$.

The raw material alloy was pulverized by a jaw crusher, and then further pulverized by a cutter mill in an argon atmosphere, and thereafter, the grain size was regulated by a sieve to obtain a powder of approximately 60 $\mu$m in average grain diameter. The Nd-Fe raw material alloy powder was charged in a horizontal tubular furnace, and subjected to a heat treatment at 420°C in a mixed gas flow having an ammonia partial pressure of 0.35 atm and a hydrogen gas partial pressure of 0.65 atm for 2 hours to adjust the alloy powder into an $Nd_{9.1}(Fe_{0.85}Co_{0.1}Mn_{0.05})_{77.2}N_{13.7}$ composition of approximately 25 $\mu$m in average grain diameter.

Then, the rare earth-iron-nitrogen based magnetic material thus obtained was pulverized at an argon gas pressure of 0.9 MPa by a jet mill under the conditions of three passing times to fabricate an Nd-Fe-Co-Mn-N based magnetic material of approximately 2.5 $\mu$m in average grain diameter. The magnetic material was blended with 10% by mass of an epoxy resin, and charged in a superhard mold, and subjected to a rotating magnetic field orientation by rotating the charged magnetic material together with the superhard mold in a magnetic field of 1.2 MA at a rotation speed of 120 rpm for 2 min, and thereafter press molded at 0.5 GPa simultaneously on stopping the rotation of the metal mold, and thereafter, cured at 150°C for 2 hours to fabricate a toroidal sample A. The obtained sample had a density of 4.6 and a volume fraction of the rare earth-iron-nitrogen based magnetic material of 53% by volume.

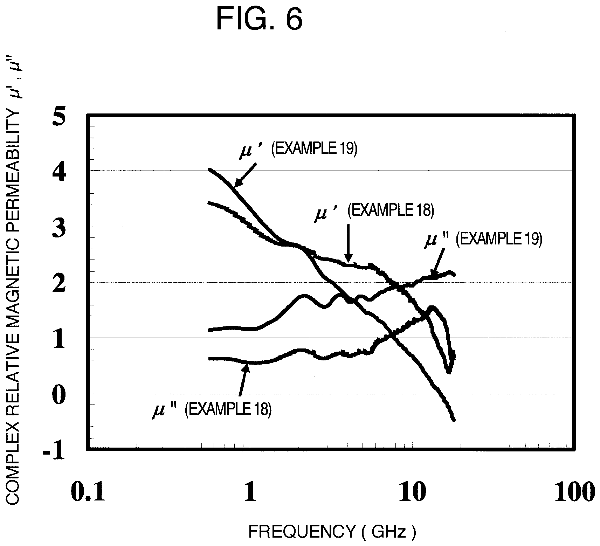

The frequency dependency of the complex relative magnetic permeability at 0.5 to 18 GHz of the rare earth-iron-nitrogen based magnetic materials is shown in Fig. 6. The maximum value of the imaginary term of the complex relative magnetic permeability was $\mu''_{max}=1.5$ at a frequency of 13.2 GHz. The maximum value of the real term of the complex relative magnetic permeability was $\mu'_{max}=3.4$ at a frequency of 0.5 GHz. The maximum absorption energy coefficient was $f\mu''_{max}=21$ GHz at a frequency of 14.1 GHz. The selective absorption ratio at 1 GHz or higher was 2.7. These magnetic characteristics are shown in Table 1.

The electric resistivity (P method) of the rare earth-iron-nitrogen based magnetic material was 2,100 $\mu\Omega$cm. As a result of the analysis by X-ray diffractometry of the magnetic material, a diffraction line indicating mainly the rhombohedral system was observed. The same analysis as in Examples 3 and 4 revealed that the rare earth-iron-nitrogen based magnetic material of the present example was an in-plane magnetic anisotropic material.

[Example 19]

Nd of 99.9% in purity and Fe of 99.9% in purity were melted and mixed in an arc melting furnace in an argon gas atmosphere to fabricate an ingot. The ingot was annealed further in an argon atmosphere at 1,030°C for 20 hours, slowly cooled, and subjected to a surface polishing to prepare a raw material alloy having a composition of $Nd_{10.5}Fe_{89.5}$.

The raw material alloy was pulverized by a jaw crusher, and then further pulverized by a cutter mill in an argon atmosphere, and the grain size was regulated by a sieve to obtain a powder of approximately 60 $\mu$m in average grain diameter. The Nd-Fe raw material alloy powder was charged in a horizontal tubular furnace, and subjected to a heat treatment at 450°C in a mixed gas flow having an ammonia partial pressure of 0.35 atm and a hydrogen gas partial pressure of 0.65 atm for 2 hours to adjust the alloy powder into a rare earth-iron-nitrogen based magnetic material having a highly nitrided composition of $Nd_{8.8}Fe_{75.2}N_{16.0}$ of approximately 27 $\mu$m in average grain diameter.

Then, the rare earth-iron-nitrogen based magnetic material thus obtained was pulverized at an argon gas pressure of 0.9 MPa by a jet mill under the conditions of three passing times to fabricate an Nd-Fe-N based magnetic material of approximately 2.7 $\mu$m in average grain diameter. The magnetic material was blended with 10% by mass of an epoxy resin, and subjected to a rotating magnetic field orientation by the same method as in Example 18, press molded at 0.5 GPa, and thereafter, cured at 150°C for 2 hours to fabricate a toroidal sample A. The obtained sample had a density of 4.4 and a volume fraction of the magnetic material of 51% by volume.

The frequency dependency of the complex relative magnetic permeability at 0.5 to 18 GHz of the rare earth-iron-nitrogen based magnetic material-resin composite material is shown in Fig. 6. The maximum value of the imaginary term of the complex relative magnetic permeability was $\mu''_{max}=2.2$ at a frequency of 17.1 GHz. The maximum value of the real term of the complex relative magnetic permeability was $\mu'_{max}=4.0$ at a frequency of 0.5 GHz. The maximum absorption energy coefficient was $f\mu''_{max}=38$ GHz at a frequency of 18 GHz. The selective absorption ratio at 1 GHz or higher was 1.9. These magnetic characteristics are shown in Table 1.

The electric resistivity (P method) of the magnetic material was 2,000 $\mu\Omega$ m. As a result of the analysis by X-ray diffractometry of the magnetic material, a diffraction line indicating mainly the rhombohedral system was observed. The same analysis as in Examples 3 and 4 revealed that the rare earth-iron-nitrogen based magnetic material of the present example was an in-plane magnetic anisotropic material.

[Example 20] (not according to the invention)

Nd of 99.9% in purity, Fe of 99.9% in purity and Mn of 99.9% in purity were melted and mixed in an arc melting furnace in an argon gas atmosphere to fabricate an ingot. The ingot was annealed further in an argon atmosphere at 1,030°C for 20 hours, slowly cooled, and subjected to a surface polishing to prepare a raw material alloy having a composition of $Nd_{10.5}(Fe_{0.95}Mn_{0.05})_{89.5}$.

The raw material alloy was pulverized by a jaw crusher, and then further pulverized by a cutter mill in an argon atmosphere, and the grain size was regulated by a sieve to obtain a powder of approximately 60 $\mu$m in average grain diameter. The Nd-Fe-Mn raw material alloy powder was charged in a horizontal tubular furnace, and subjected to a heat treatment at 420°C in a mixed gas flow having an ammonia partial pressure of 0.35 atm and a hydrogen gas partial pressure of 0.65 atm for 2 hours to adjust the alloy powder into an $Nd_{8.4}(Fe_{0.95}Mn_{0.05})_{71.7}N_{19.9}$ composition of approximately 30 $\mu$m in average grain diameter.

Then, the rare earth-iron-nitrogen based magnetic material thus obtained was pulverized at an argon gas pressure of 0.9 MPa by a jet mill under the conditions of three passing times to fabricate an Nd-Fe-Mn-N based magnetic material of approximately 2.7 $\mu$m in average grain diameter. This rare earth-iron-nitrogen based magnetic material was subjected to the same ferrite coating treatment method as in Example 11, except for using the altered reaction condition in which pH of the system was adjusted so as to be gradually shifted from an acidic side to an alkali side in the range of 4.2 to 14.7, to obtain a ferrite coated rare earth-iron-nitrogen based magnetic material having an $Nd_{7.4}Fe_{64.9}Mn_{3.1}N_{17.5}O_{7.1}$ composition of approximately 2.8 $\mu$m in average grain diameter. The ferrite coating layer had a thickness of approximately 50 nm. The electron beam diffractometry and the EPMA measurement of the ferrite coating layer revealed that the ferrite coating layer was an intermediate phase of magnetite and maghemite having a spinel structure. As a result of X-ray diffractometry, a diffraction line indicating mainly the rhombohedral system was observed.

The ferrite-coated rare earth-iron-nitrogen based magnetic material was added with 1% by mass of a silane coupling agent, mixed in isopropanol, and subjected to a heat treatment at 120°C for 30 min in vacuum to carry out a surface treatment. Then ,the silane-coupled ferrite-coated rare earth-iron-nitrogen based magnetic material was blended with 10% by mass of an epoxy resin, press molded at 1.5 GPa, and cured at 150°C for 5 hours to fabricate a cylindrical magnetic material-resin composite material of 4 mm in diameter $\times$ 5 mm in thickness. This was worked to fabricate a toroidal sample B of 0.81 mm in thickness. The magnetic material had a volume fraction of 51% by volume.

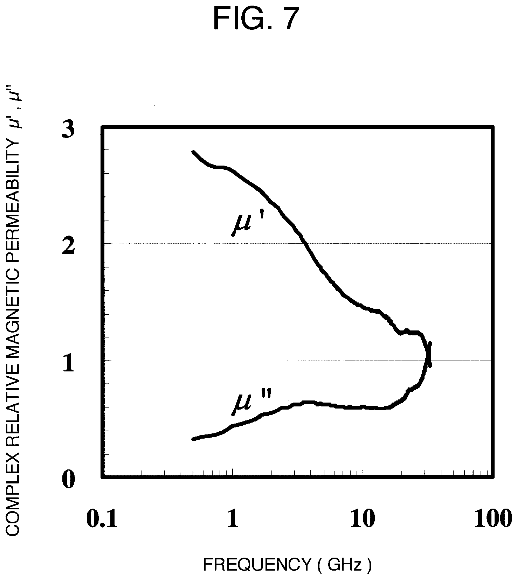

The frequency dependency of the complex relative magnetic permeability at 0.5 to 33 GHz of the magnetic material-resin composite material is shown in Fig. 7. Magnetic characteristics measurement results of respective items of the maximum value of the imaginary term of the complex relative magnetic permeability and the frequency at this time and the maximum value of the real term thereof and the frequency at this time, and the maximum absorption energy coefficient are shown in Table 2. In the magnetic material-resin composite material, the imaginary term $\mu$" of the complex relative magnetic permeability did not reach a maximum value even at 33 GHz, and was still increasing with the frequency. Therefore, the maximum value of $\mu$" and the value of $f\mu"_{max}$ were values at 33 GHz. The selective absorption ratio of the magnetic material-resin composite material at 1 GHz or higher was 2.7.

The electric resistivity (P method) of the ferrite-coated rare earth-iron-nitrogen based magnetic material exhibited approximately 10,000 $\mu\Omega$cm, which was a high value approximately 5 times the electric resistivity (P method) of the non-plated rare earth-iron-nitrogen based magnetic material. The same analysis as in Examples 3 and 4 revealed that the rare earth-iron-nitrogen based magnetic material of the present Example was an in-plane magnetic anisotropic material.

[0109]

[Table 1]

| Examples | Rare earth-iron-nitrogen based material composition | Volume fraction of rare earth-iron-nitrogen based material (vol%) | Other components such as resin | The maximum value of imaginary term of complex relative magnetic permeability $\mu''_{max}$ | Frequency at $\mu''_{max}$, i.e. the maximum absorption frequency $f_a$ (GHz) | |
|---|---|---|---|---|---|---|
| Example 1 | $Nd_{10.1}Fe_{76.7}N_{13.2}$ | 47 | epoxy resin | 3.9 | 1.9 | |
| Comparative Example 1 | $Nd_{11.6}Fe_{88.4}$ | 47 | epoxy resin | 1.0 | 0.5 | |
| Comparative Example 2 | $Nd_{11.8}Fe_{77.6}Co_{5.5}B_{5.1}$ | 47 | epoxy resin | 0.3 | 0.5 | |
| Example 2* | $Nd_{8.0}Fe_{60.8}N_{10.6}H_{7.8}O_{12.8}$ | 62 | epoxy resin | 3.8 | 3.0 | |
| Example 3 | $Nd_{9.1}Fe_{77.3}N_{13.6}$ | 40 | epoxy resin | 1.8 | 5.7 | |
| Example 4 | $Nd_{9.1}Fe_{77.3}N_{13.6}$ | 40 | epoxy resin | 2.2 | 4.7 | |
| Example 5 | $Nd_{10.1}Fe_{78.7}N_{13.2}$ | 50 | Fe powder | 4.2 | 3.0 | |
| Comparative Example 3 | – | – | Fe powder | 3.3 | 0.08 | |
| Example 6 | $Nd_{11.1}Fe_{77.7}N_{11.2}$ | 58 | epoxy resin | 4.5 | 1.3 | |
| Example 7* | $(Nd_{0.7}Ce_{0.3})_{9.5}(Fe_{0.7}Co_{0.3})_{80.5}N_{10.0}$ | 52 | epoxy resin | 3.7 | 1.6 | |
| Example 8* | $Nd_{8.3}(Fe_{0.95}Mn_{0.05})_{70.2}N_{21.5}$ | 54 | epoxy resin | 2.7 | 6.3 | |
| Example 9 | $Dy_{9.0}Fe_{77.0}N_{14.0}$ | 56 | epoxy resin | 2.1 | 6.8 | |
| Example 10 | $Nd_{9.1}Fe_{77.3}N_{13.6}$ | 54 | 12-nylon resin | 2.0 | 6.5 | |
| Example 18* | $Nd_{9.1}(Fe_{0.85}Co_{0.1}Mn_{0.05})_{77.2}N_{13.7}$ | 53 | epoxy resin | 1.5 | 13.2 | |
| Example 19 | $Nd_{8.8}Fe_{75.2}N_{16.0}$ | 51 | epoxy resin | 2.2 | 17.1 | |

* not according to the invention

...Continued

[Table 1] (Continued)

| Examples | The maximum value of real term of complex relative magnetic permeability $\mu'_{max}$ | Frequency at $\mu''_{max}$ $f_t$ (GHz) | The maximum absorption energy coefficient $f\mu''_{max}$ (GHz) | Selective absorption ratio at 1 GHz or higher $\mu_f$ | Remarks |
|---|---|---|---|---|---|
| Example 1 | 3.3 | 0.5 | 9.3 | 1.6 | |
| Comparative Example 1 | 0.4 | 0.5 | 1.4 | 0.7 | |
| Comparative Example 2 | 0.8 | 0.5 | 1.1 | 0.9 | |
| Example 2* | 8.4 | 0.01 | 11 | 1.3 | uniaxial magnetic field orientation |
| Example 3 | 2.4 | 0.5 | 12 | 36 | non-orientation |
| Example 4 | 3.0 | 0.5 | 12 | 32 | rotating magnetic field orientation |
| Example 5 | 9.5 | 0.005 | 13 | 1.2 | |
| Comparative Example 3 | 11 | 0.005 | 6.0 | 0.7 | |
| Example 6 | 6.9 | 0.005 | 6.5 | 1.2 | average flatness ratio $\psi$=0.2 |
| Example 7* | 7.9 | 0.5 | 7.1 | 1.1 | |
| Example 8* | 4.2 | 0.5 | 19 | 42 | |
| Example 9 | 2.8 | 0.5 | 16 | 51 | |
| Example 10 | 3.1 | 0.5 | 16 | 72 | |
| Example 18* | 3.4 | 0.5 | 21 | 2.7 | rotating magnetic field orientation |
| Example 19 | 4.0 | 0.5 | 38 | 1.9 | rotating magnetic field orientation |

*not according to the invention

[Table 2]

| Examples | Ferrite-coated rare earth-iron-nitrogen based material composition | Rare earth-iron-nitrogen based material composition | Grain diameter of rare earth-iron-nitrogen based material ($\mu$m) | Ferrite phase (nm) | Thickness of ferrite coating layer ($\mu$m) | Resin component (mass%) |
|---|---|---|---|---|---|---|
| Example 11 | $Nd_{8.6}Fe_{71.2}N_{11.2}O_{9.0}$ | $Nd_{10.1}Fe_{78.7}N_{13.2}$ | 2 | magnetite-maghemite | 50 | epoxy (12) |
| Example 12 | $Nd_{8.0}Fe_{73.1}N_{11.9}O_{7.0}$ | $Nd_{9.1}Fe_{77.3}N_{13.6}$ | 4 | magnetite-maghemite | 100 | epoxy (10) |
| Example 13 | $Nd_{8.0}Fe_{73.1}N_{11.9}O_{7.0}$ | $Nd_{9.1}Fe_{77.3}N_{13.6}$ | 4 | magnetite-maghemite | 100 | epoxy (10) |
| Example 14 | $Dy_{7.9}Fe_{71.3}Ni_{1.7}N_{12.3}O_{6.8}$ | $Dy_{9.0}Fe_{77.0}N_{14.0}$ | 1 | Ni-ferrite | 20 | epoxy (6) |
| Example 15 | $Nd_{7.4}Fe_{64.8}Mn_{3.1}N_{18.5}O_{6.7}$ | $Nd_{8.3}(Fe_{0.95}Mn_{0.05})_{70.9}N_{20.8}$ | 3 | magnetite-maghemite | 50 | epoxy (10) |
| Example 16 | $Nd_{8.0}Fe_{70.7}Zn_{2.6}N_{11.9}O_{6.8}$ | $Nd_{9.1}Fe_{77.3}N_{13.6}$ | 2.2 | Zn-ferrite | 50 | epoxy (8) |
| Example 17 | $Nd_{8.0}Fe_{73.1}N_{11.9}O_{7.0}$ | $Nd_{9.1}Fe_{77.3}N_{13.6}$ | 4 | magnetite-maghemite | 100 | 12-nylon (9.8) |
| Example 20 | $Nd_{7.4}Fe_{64.8}Mn_{3.1}N_{17.5}O_{7.1}$ | $Nd_{8.4}(Fe_{0.95}Mn_{0.05})_{71.7}N_{19.9}$ | 2.7 | magnetite-maghemite | 50 | epoxy (10) |

...Continued

| The maximum value of imagniary term of complex relative magnetic permeability $\mu''_{max}$ | Frequency at $\mu''_{max}$, i.e. the maximum absorption frequency $f_a$ (GHz) | The maximum value of real term of complex relative magnetic permeability $\mu'_{max}$ | Frequency at $\mu''_{max}$ $f_t$ (GHz) | The maximum absorption energy coefficient $f\mu''_{max}$ (GHz) | Remarks |
|---|---|---|---|---|---|
| 4.4 | 2.8 | 4.4 | 0.5 | 16 | |
| 2.4 | 5.9 | 4.2 | 0.5 | 14 | non-orientation |
| 3.2 | 5.0 | 4.5 | 0.5 | 17 | rotating magnetic field orientation |
| 2.2 | 12 | 3.5 | 0.5 | 28 | |
| 1.3 | 18 | 3.6 | 0.5 | 23 | |
| 1.3 | 8.5 | 4.1 | 0.5 | 14 | |
| 2.5 | 7.1 | 3.7 | 0.5 | 21 | |
| 1.2 | 33 | 2.8 | 0.5 | 40 | |

INDUSTRIAL APPLICABILITY

Since the rare earth-iron-nitrogen based magnetic material according to the present invention has simultaneously properties of a high magnetic permeability and a high electric resistivity, which are antinomic properties for conventional oxide magnetic materials and conventional metal-based magnetic materials, the rare earth-iron-nitrogen based magnetic material can provide a magnetic material for a high frequency wave usable in an ultrahigh frequency field of 1 GHz or higher. Further, the ferrite-coated rare earth-iron-nitrogen based magnetic material according to the present invention can provide a magnetic material for a high frequency wave more improved in the magnetic permeability and usable in a high frequency field.

The present invention is used for a magnetic material for a high frequency wave, including magnetic materials used in transformers, heads, inductors, reactors, magnetic cores, yokes, antennas, microwave devices, magnetostriction devices, magnetoacoustic devices and magnetic recording devices, which are used mainly in power equipment and information-communications related devices and which are used in high or ultrahigh frequency fields, and sensors through magnetic fields such as Hall elements, magnetic sensors, electric current sensors, rotation sensors and electronic compasses; further including magnetic materials to suppress interruptions by unnecessary electromagnetic interference, such as electromagnetic noise absorbing materials, electromagnetic wave absorbing materials and materials for magnetic shield; and magnetic materials to remove noises from signals in high frequency or ultrahigh frequency fields, such as materials for inductor elements such as inductors for noise removal, materials for RFID (Radio Frequency Identification) tags and materials for noise filters.

BRIEF DESCRIPTION OF THE DRAWINGS

Fig. 1 is a diagram showing frequency dependencies of the real term of a complex relative magnetic permeability $\mu'$ and the imaginary term thereof $\mu''$ in a magnetic material-resin composite material for a high frequency field obtained in Example 1;

Fig. 2 is a diagram showing frequency dependencies of the real term of a complex relative permittivity $\varepsilon'$ and the imaginary term thereof $\varepsilon''$ in a magnetic material-resin composite material for a high frequency field obtained in Example 1;

Fig. 3 is a diagram showing frequency dependencies of the real term of a complex relative magnetic permeability $\mu'$ and the imaginary term thereof $\mu''$ in a magnetic material-resin composite material obtained in Comparative Example 1;

Fig. 4 is a diagram showing frequency dependencies of the real term of a complex relative magnetic permeability $\mu'$ and the imaginary term thereof $\mu''$ in a magnetic material-resin composite material obtained in Comparative Example 2;

Fig. 5 is a diagram showing frequency dependencies of the real terms of complex relative magnetic permeabilities $\mu'$ and the imaginary terms thereof $\mu''$ in a magnetic material for a high frequency wave obtained in Example 5 and a magnetic material obtained in Comparative Example 3;

Fig. 6 is a diagram showing frequency dependencies of the real terms of complex relative magnetic permeabilities $\mu'$ and the imaginary terms thereof $\mu''$ in magnetic material-resin composite materials for high frequency fields obtained in Examples 18 and 19; and

Fig. 7 is a diagram showing frequency dependencies of the real term of a complex relative magnetic permeability $\mu'$ and the imaginary term thereof $\mu''$ in a magnetic material-resin composite material for a high frequency field obtained in Example 20.

**Claims**

1. A magnetic material for a high frequency wave of from 0.005 to 100 GHz comprising a rare earth-iron-nitrogen based magnetic material, the crystal structure of the main phase of which is selected from any one of hexagonal crystal, rhombohedral crystal and tetragonal crystal,
   wherein the rare earth-iron-nitrogen based magnetic material has an in-plane magnetic anisotropy as a crystal magnetic anisotropy, and
   wherein the magnetic material has an average grain diameter of 0.2 to 200 $\mu$m, and
   wherein the rare earth-iron-nitrogen based magnetic material is represented by the following general formula:

   $$R_xFe_{(100-x-y)}N_y \qquad (I)$$

wherein R is at least one kind selected from Y, Ce, Pr, Nd, Gd, Tb, Dy, Ho, Er, Tm, Lu and Sm; and when R contains Sm, the whole R component contains less than 50% by atom of Sm; and x and y are numbers that satisfy $3 \leq x \leq 30$ and $1 \leq y \leq 30$ % by atom, respectively.

2. The magnetic material for a high frequency wave according to claim 1, wherein the proportion of nitrogen in the rare earth-iron-nitrogen based magnetic material represented by the general formula (I) is $12 \leq y \leq 25$.

3. The magnetic material for a high frequency wave according to any one of claims 1 or 2, wherein a surface of the rare earth-iron-nitrogen based magnetic material is coated with a ferrite-based magnetic material.

4. The magnetic material for a high frequence wave according to claim 3, wherein the ferrite-based magnetic material is a ferrite having a spinel structure.

5. The magnetic material for a high frequency wave according to claim 3 or 4, wherein the ferrite-based magnetic material has a thickness of 0.8 to 10,000 nm.

6. A magnetic material-resin composite material for a high frequency wave, comprising 5 to 99.9 % by mass of the magnetic material for a high frequency wave according to any one of claims 1 to 5 and 0.1 to 95 % by mass of a resin.

7. The magnetic material for a high frequency wave according to any one of claims 1 to 5, wherein the magnetic material is magnetically oriented.

8. Use of the magnetic material for a high frequency wave as defined in any one of claims 1 to 5, in a method for producing an electromagnetic wave absorbing material.

9. Use of the magnetic material for a high frequency wave as defined in any one of claims 1 to 5, in a method for producing an electromagnetic noise absorbing material.

10. Use of the magnetic material for a high frequency wave as defined in any one of claims 1 to 5, in a method for producing a material for a Radio Frequency Identification (RFID) tag.

11. A method for producing the magnetic material for a high frequency wave according to claim 1, comprising subjecting an alloy composed substantially of an R component and an Fe component to a heat treatment in an atmosphere containing ammonia gas or nitrogen gas in the range of 200 to 650 °C.

12. A method for producing the rare earth-iron-nitrogen based magnetic material for use in the magnetic material for a high frequency wave according to claim 3, comprising subjecting a rare earth-iron-nitrogen based magnetic material to a ferrite plating treatment, wherein the rare earth-iron-nitrogen based magnetic material is produced by the method according to claim 11; or subjecting a rare earth-iron-nitrogen based magnetic material to a ferrite plating treatment, wherein the rare earth-iron-nitrogen based magnetic material is produced using the further process of a fine pulverization in addition to the method according to claim 11.

**Patentansprüche**

1. Magnetisches Material für eine Hochfrequenzwelle von 0,005 bis 100 GHz, das ein magnetisches Material auf Seltenerdmetall-Eisen-Stickstoff-Basis umfasst, wobei die Kristallstruktur von dessen Hauptphase aus einem hexagonalen Kristall, einem rhomboedrischen Kristall und einem tetragonalen Kristall ausgewählt ist;
wobei das magnetische Material auf Seltenerdmetall-Eisen-Stickstoff-Basis eine magnetische In-Plane-Anisotropie als magnetische Kristallanisotropie aufweist; und
wobei das magnetische Material einen mittleren Korndurchmesser von 0,2 bis 200 $\mu$m aufweist; und
wobei das magnetische Material auf Seltenerdmetall-Eisen-Stickstoff-Basis durch die folgende allgemeine Formel dargestellt wird:

$$R_xFe_{(100-x-y)}N_y \qquad (I),$$

wobei R wenigstens eine Art ist, die aus Y, Ce, Pr, Nd, Gd, Tb, Dy, Ho, Er, Tm, Lu und Sm ausgewählt ist,

und wenn R Sm enthält, die gesamte R-Komponente weniger als 50 Atom-% Sm enthält,
und x und y Zahlen sind, die den Bedingungen $3 \leq x \leq 30$ bzw. $1 \leq y \leq 30$ Atom-% genügen.

2. Magnetisches Material für eine Hochfrequenzwelle gemäß Anspruch 1, wobei für den Anteil von Stickstoff in dem durch die allgemeine Formel (I) dargestellten magnetischen Material auf Seltenerdmetall-Eisen-Stickstoff-Basis gilt: $12 \leq y \leq 25$.

3. Magnetisches Material für eine Hochfrequenzwelle gemäß einem der Ansprüche 1 oder 2, wobei eine Oberfläche des magnetischen Materials auf Seltenerdmetall-Eisen-Stickstoff-Basis mit einem magnetischen Material auf Ferritbasis beschichtet ist.

4. Magnetisches Material für eine Hochfrequenzwelle gemäß Anspruch 3, wobei das magnetische Material auf Ferritbasis ein Ferrit mit einer Spinellstruktur ist.

5. Magnetisches Material für eine Hochfrequenzwelle gemäß Anspruch 3 oder 4, wobei das magnetische Material auf Ferritbasis eine Dicke von 0,8 bis 10 000 nm aufweist.

6. Verbundstoff aus magnetischem Material/Harz für eine Hochfrequenzwelle, umfassend 5 bis 99,9 Massen-% des magnetischen Materials für eine Hochfrequenzwelle gemäß einem der Ansprüche 1 bis 5 und 0,1 bis 95 Massen-% eines Harzes.

7. Magnetisches Material für eine Hochfrequenzwelle gemäß einem der Ansprüche 1 bis 5, wobei das magnetische Material magnetisch orientiert ist.

8. Verwendung des magnetischen Materials für eine Hochfrequenzwelle gemäß einem der Ansprüche 1 bis 5 in einem Verfahren zur Herstellung eines elektromagnetische Wellen absorbierenden Materials.

9. Verwendung des magnetischen Materials für eine Hochfrequenzwelle gemäß einem der Ansprüche 1 bis 5 in einem Verfahren zur Herstellung eines elektromagnetisches Rauschen absorbierenden Materials.

10. Verwendung des magnetischen Materials für eine Hochfrequenzwelle gemäß einem der Ansprüche 1 bis 5 in einem Verfahren zur Herstellung eines Materials für einen RFID-Tag (Funketikett, Transponder).

11. Verfahren zur Herstellung des magnetischen Materials für eine Hochfrequenzwelle gemäß Anspruch 1, umfassend das Durchführen einer Wärmebehandlung mit einer Legierung, die im Wesentlichen aus einer R-Komponente und einer Fe-Komponente besteht, in einer Atmosphäre, die Ammoniakgas oder Stickstoffgas im Bereich von 200 bis 650 °C enthält.

12. Verfahren zur Herstellung des magnetischen Materials auf Seltenerdmetall-Eisen-Stickstoff-Basis zur Verwendung in dem magnetischen Material für eine Hochfrequenzwelle gemäß Anspruch 3, umfassend das Durchführen einer Ferritbeschichtungsbehandlung mit einem magnetischen Material auf Seltenerdmetall-Eisen-Stickstoff-Basis, wobei das magnetische Material auf Seltenerdmetall-Eisen-Stickstoff-Basis nach dem Verfahren gemäß Anspruch 11 hergestellt ist, oder das Durchführen einer Ferritbeschichtungsbehandlung mit einem magnetischen Material auf Seltenerdmetall-Eisen-Stickstoff-Basis, wobei das magnetische Material auf Seltenerdmetall-Eisen-Stickstoff-Basis neben dem Verfahren gemäß Anspruch 11 unter Verwendung des weiteren Verfahrens einer Feinpulverisierung hergestellt ist.

## Revendications

1. Matériau magnétique pour une onde à haute fréquence de 0,005 à 100 GHz comprenant un matériau magnétique à base d'élément des terres rares-fer-azote, la structure cristalline de la phase principale de celui-ci étant sélectionnée parmi l'un quelconque d'un cristal hexagonal, d'un cristal rhomboédrique et d'un cristal tétragonal,
dans lequel le matériau magnétique à base d'élément des terres rares-fer-azote a une anisotropie magnétique dans le plan en tant qu'anisotropie magnétique cristalline, et
dans lequel le matériau magnétique a un diamètre de grain moyen de 0,2 à 200 $\mu$m, et
dans lequel le matériau magnétique à base d'élément des terres rares-fer-azote est représenté par la formule générale suivante :

$$R_xFe_{(100-x-y)}N_y \qquad (I)$$

où R est au moins une espèce choisie parmi Y, Ce, Pr, Nd, Gd, Tb, Dy, Ho, Er, Tm, Lu et Sm ; et lorsque R contient du Sm, l'ensemble du composant R contient moins de 50 % par atome de Sm ; et x et y sont des nombres qui satisfont $3 \leq x \leq 30$ et $1 \leq y \leq 30$ % par atome, respectivement.

2. Matériau magnétique pour une onde à haute fréquence selon la revendication 1, dans lequel la proportion d'azote dans le matériau magnétique à base d'élément des terres rares-fer-azote représentée par la formule générale (I) est $12 \leq y \leq 25$.

3. Matériau magnétique pour une onde à haute fréquence selon l'une quelconque des revendications 1 ou 2, dans lequel une surface du matériau magnétique à base d'élément des terres rares-fer-azote est enduite d'un matériau magnétique à base de ferrite.

4. Matériau magnétique pour une onde à haute fréquence selon la revendication 3, dans lequel le matériau magnétique à base de ferrite est une ferrite ayant une structure de spinelle.

5. Matériau magnétique pour une onde à haute fréquence selon la revendication 3 ou 4, dans lequel le matériau magnétique à base de ferrite a une épaisseur de 0,8 à 10 000 nm.

6. Matériau composite matériau magnétique-résine pour une onde à haute fréquence, comprenant 5 à 99,9 % en masse du matériau magnétique pour une onde à haute fréquence selon l'une quelconque des revendications 1 à 5 et 0,1 à 95 % en masse d'une résine.

7. Matériau magnétique pour une onde à haute fréquence selon l'une quelconque des revendications 1 à 5, dans lequel le matériau magnétique est orienté magnétiquement.

8. Utilisation du matériau magnétique pour une onde à haute fréquence selon l'une quelconque des revendications 1 à 5, dans un procédé de production d'un matériau absorbant les ondes électromagnétiques.

9. Utilisation du matériau magnétique pour une onde à haute fréquence selon l'une quelconque des revendications 1 à 5, dans un procédé de production d'un matériau absorbant le bruit électromagnétique.

10. Utilisation du matériau magnétique pour une onde à haute fréquence selon l'une quelconque des revendications 1 à 5, dans un procédé de production d'un matériau pour une étiquette d'identification radiofréquence (RFID).

11. Procédé de production du matériau magnétique pour une onde à haute fréquence selon la revendication 1, comprenant la soumission d'un alliage composé sensiblement d'un composant R et d'un composant Fe à un traitement thermique dans une atmosphère contenant de l'ammoniac ou de l'azote gazeux dans la plage de 200 à 650°C.

12. Procédé de production du matériau magnétique à base d'élément des terres rares-fer-azote pour utilisation dans le matériau magnétique pour une onde à haute fréquence selon la revendication 3, comprenant la soumission d'un matériau magnétique à base d'élément des terres rares-fer-azote à un traitement de placage au ferrite, dans lequel le matériau magnétique à base d'élément des terres rares-fer-azote est produit par le procédé selon la revendication 11 ; ou la soumission d'un matériau magnétique à base d'élément des terres rares-fer-azote à un traitement de placage au ferrite, dans lequel le matériau magnétique à base d'élément des terres rares-fer-azote est produit au moyen du procédé complémentaire de fine pulvérisation ajouté au procédé selon la revendication 11.

# FIG. 1

# FIG. 2

# FIG. 3

FIG. 4

# FIG. 5

# FIG. 6

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002329603 A
- JP 8055712 A
- JP 8144024 A
- JP 3153851 A
- JP 2002093607 A
- JP 2703281 B
- JP 2005005286 A
- JP 3560387 B
- JP 3784085 B
- WO 2003015109 A

### Non-patent literature cited in the description

- Phenomenological Theory of Permeability in Spin-Sprayed NiZn Ferrite Films Usable for GHz Conducted Noise Suppressors. **M. ABE ; M. TADA.** The Papers of Technical Meeting, MAG-05-135 (Dec. 5 to 6, 2005, Technical Meeting on Magnetics). The Institute of Electrical Engineers of Japan, 05 December 2005
- **T. IRIYAMA ; K. KOBAYASHI ; N. IMAOKA ; T. FUKUDA ; H. KATO ; Y. NAKAGAWA.** Effect of Nitrogen Content on Magnetic Properties of Sm2Fe17Nx (0<x<6). *IEEE Trans Magn,* 1992, vol. 2 (5-2), 2326-2331
- **T. MAEDA ; S. SUGIMOTO ; T. KAGOTANI ; D. BOOK ; M. HOMMA ; H, OTA ; Y. HONJOU.** Electromagnetic Microwave Absorption of a-Fe Microstructure Produced by Disproportionation Reaction Of Sm2Fe17 Compound. *Materials Trans, JIM,* 2000, vol. 41 (9), 1172-1175
- **S. SUGIMOTO ; T. MAEDA ; D. BOOK ; T.KAGOTANI ; K. LNOMATA ; M. HOMMA ; H. OTA ; Y. HONJOU ; R. SATO.** GHz microwave absorption of a fine a-Fe structure produced by disproportionation of Sm2Fe17 in hydrogen. *J.of Alloys and Compounds,* 2002, vol. 330 (332), 301-306
- **N. IMAOKA ; A. OKAMOTO ; H. KATO ; T. OHSUNA ; K. HIRAGA ; M. MOTOKAWA.** Magnetic Properties and Microstructure of Mn-added Sm2Fe17Nx based Material. *Journal of the Magnetics Society of Japan,* 1998, vol. 22 (4-2), 353-356
- **M. ABE.** *Journal of the Magnetics Society of Japan,* 1998, vol. 22 (9), 1225